(19) Europäisches Patentamt
European Patent Office
Office européen des brevets

(11) **EP 2 926 063 B1**

(12) **EUROPÄISCHE PATENTSCHRIFT**

(45) Veröffentlichungstag und Bekanntmachung des Hinweises auf die Patenterteilung:
**05.08.2020 Patentblatt 2020/32**

(21) Anmeldenummer: **12812518.4**

(22) Anmeldetag: **06.12.2012**

(51) Int Cl.:
*F24S 30/425* (2018.01)     *F24S 30/452* (2018.01)
*H02S 20/10* (2014.01)      *H02S 20/32* (2014.01)
*H02S 20/00* (2014.01)

(86) Internationale Anmeldenummer:
**PCT/EP2012/005027**

(87) Internationale Veröffentlichungsnummer:
**WO 2014/082653 (05.06.2014 Gazette 2014/23)**

(54) **NACHFÜHREINRICHTUNG MIT EINER UM WENIGSTENS EINE ACHSE VERSTELLBAREN AUFNAHMESTRUKTUR ZUR MONTIERUNG WENIGSTENS EINES FÜR ELEKTROMAGNETISCHE WELLEN SENSIBLEN ELEMENTS MIT EINER STRAHLUNGSTECHNISCHEN VORZUGSRICHTUNG**

TRACKING DEVICE COMPRISING A RECEIVING STRUCTURE WHICH CAN BE ADJUSTED ABOUT AT LEAST ONE AXIS, FOR MOUNTING AT LEAST ONE ELEMENT THAT IS SENSITIVE TO ELECTROMAGNETIC WAVES AND HAS A PREFERENTIAL RADIATION DIRECTION

DISPOSITIF D'ASSERVISSEMENT ÉQUIPÉ D'UNE STRUCTURE DE RÉCEPTION DÉPLAÇABLE SUR UN OU PLUSIEURS AXES ET DESTINÉE AU MONTAGE D'UN OU PLUSIEURS ÉLÉMENTS SENSIBLES AUX ONDES ÉLECTROMAGNÉTIQUES ET PRÉSENTANT UNE DIRECTION DE RAYONNEMENT PRÉFÉRENTIELLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.11.2012 DE 102012023165**

(43) Veröffentlichungstag der Anmeldung:
**07.10.2015 Patentblatt 2015/41**

(73) Patentinhaber: **IMO Holding GmbH**
**91350 Gremsdorf (DE)**

(72) Erfinder:
• **RUSS, Erich**
**91350 Gremsdorf (DE)**

• **FRANK, Hubertus**
**91315 Höchstadt (DE)**
• **NIEF, Richard**
**91083 Baiersdorf (DE)**
• **BÜTTEL, Konrad**
**96129 Strullendorf (DE)**

(74) Vertreter: **Schmidt, Steffen J. et al**
**Wuesthoff & Wuesthoff**
**Patentanwälte PartG mbB**
**Schweigerstrasse 2**
**81541 München (DE)**

(56) Entgegenhaltungen:
EP-A1- 2 327 906     WO-A2-2009/147454
CN-Y- 201 269 283    DE-A1-102010 014 087
US-A1- 2009 229 597

**Beschreibung**

Die Erfindung richtet sich auf eine Nachführeinrichtung mit wenigstens einer um wenigstens eine Achse verstellbaren Aufnahmestruktur zur Montierung wenigstens eines für optische oder sonstige, elektromagnetische Wellen sensiblen Elements mit einer optischen oder strahlungstechnischen Vorzugsrichtung, wie einem Solarpaneel, -reflektor, Teleskop od. dgl., und mit wenigstens je einem Drehantrieb pro Achse zur aktiven, rotatorischen Verstellung der Aufnahmestruktur, um das (die) daran montierte(n) Element(e) einem Gestirn, insbesondere der Sonne, mit Hilfe einer Steuerung nach einem vorgegebenen Algorithmus ein- oder mehrachsig nachzuführen, wobei der (alle) Drehantrieb(e) jeweils zwei zueinander konzentrische, ringförmige Anschlusselemente aufweist (-en), die aneinander gelagert und zur gegenseitigen Relativverstellung mit mindestens einem Motor gekoppelt oder koppelbar sind, wobei ein erstes Anschlusselement wenigstens eine ebene Anschlussfläche aufweist zur ortsfesten Fixierung an einem Fundament, Sockel, Ständer oder einem Anschlusselement einer anderen Schwenkeinheit, und wobei ein zweites Anschlusselement wenigstens eine ebene Anschlussfläche aufweist zur drehfesten Kopplung mit der Aufnahmestruktur oder mit einem Anschlusselement einer anderen Schwenkeinheit, wobei ferner zwischen den zueinander konzentrischen, ringförmigen Anschlusselementen einer Schwenkeinheit wenigstens eine Reihe von Wälzkörpern vorgesehen ist, die entlang von Laufbahnen an dem ersten und zweiten Anschlusselement abrollen. Im Folgenden soll mit dem Begriff "für optische oder sonstige, elektromagnetische Wellen sensibles Element" jegliche Einrichtung verstanden werden, die optische oder sonstige, elektromagnetische Wellen auffängt und auf definierte Weise entweder in eine andere Energieform umwandelt oder (beispielsweise mittels Linsen) bündelt oder (beispielsweise mittels Parabolspiegeln) reflektiert oder (beispielsweise auf einem Film) fixiert, also u.a. Reflektor- und Refraktor-Teleskope oder gar Astrokameras, insbesondere aber Photovoltaikelemente oder Solarspiegel. Da andererseits die Umwandlung aufgefangener Energie für die künftige Energieversorgung von zentraler Bedeutung sein wird und daher besondere wirtschaftliche Vorteile mit sich bringt, steht im Folgenden die Photovoltaik und die Solarthermie im Vordergrund; astronomische Anwendungen - also die Montierung und Nachführung astronomischer Geräte - sind dagegen von eher untergeordneter Bedeutung.

Die Gestirne sind für die Menschheit unter verschiedenen Aspekten relevant: Astrophysiker können daraus die Gesetzmäßigkeiten der Himmelsmechanik ebenso ableiten wie die Geschichte und das Alter des Weltalls.

Bei der Beobachtung von Gestirnen ist zu beachten, dass dazu verwendete optische Teleskope, Radioteleskope od. dgl. nicht konstant auf einen bestimmten Himmelspunkt ausgerichtet bleiben können. Zwar verharren die Gestirne relativ unbeweglich am Himmelszelt, jedoch dreht sich die Erde in 24 Stunden einmal um ihre Achse und sorgt damit dafür, dass jeder Punkt des Himmelszeltes an unserem Firmament ständig wandert, und also die Montierung eines optischen Instruments ständig nachgeführt werden muss.

Von besonderer Bedeutung unter den Gestirnen ist natürlich die Sonne, welche uns Leben, Licht und Wärme spendet und damit künftig in vermehrtem Ausmaß zur Versorgung der Menschheit mit Energie herangezogen werden wird.

Seit mehreren Dekaden widmen sich Techniker und Ingenieure weltweit der Konstruktion von Systemen, mit denen die Energie der Sonnenstrahlen aufgefangen und technisch nutzbar gemacht werden kann. Jedoch ist die technische Nutzbarmachung von Sonnenenergie erst in der letzten Zeit derart effizient geworden, dass diese auch wirtschaftlich gewinnversprechend ist, vor Allem auch deshalb, weil nun entsprechend effiziente Komponenten (vor Allem bei der Photovoltaik) zur Aufnahme und Wandlung der von den elektromagnetische Wellen in Form von Licht- oder Sonnenstrahlen übermittelten Energie zur Verfügung stehen.

Während vor mehr als 20 Jahren die Technologie zur Nutzbarmachung der Sonnenstrahlung für Umwandlung von Wärme in elektrische Energie im Wesentlichen darin bestand, möglichst gute Reflektoren und Spiegelapparaturen oder auch parabolische Anordnungen in geeigneter Weise auf gewisse Punkte zu konzentrieren bzw. zu fokussieren, um dort, zumeist im Brennpunkt solcher Spiegelapparaturen, die Energie zu bündeln und konzentriert nutzen zu können, beispielsweise durch Erhitzung von zentral aufgestellten Medienbehältern zwecks Verdampfung nach dem Prinzip der Krafterzeugung durch Heißdampf und anschließender generatorischer Wandlung, so hat sich vor Allem in den etwa letzten 20 Jahren die Technologie zur Nutzbarmachung der Sonnenstrahlung schwerpunktmäßig dahin verlagert, immer effizienter gewordene Solarpaneele, insbesondere auch in Form von flachen Sonnenkollektoren, auch Solar- oder Photovoltaikmodule (Abk.: PV) oder Solarzellen genannt, zu verwenden. Standardgemäß werden heute leistungsfähigere kristalline PV-Module oder auch PV-Dünnschichttechnologie-Module verwendet.

Ein wesentlicher Kern einer möglichst ökonomischen Nutzbarmachung der Sonnenstrahlung war stets eine optimale Ausrichtung der Trägerapparaturen für Energie aufnehmende Einheiten (wie Reflektoren, Spiegelapparaturen, Parabolanordnungen, Solarpaneele, Solarzellen, PV-Module, etc.) nach dem Stand der Sonne und zwar so, dass möglichst eine maximale Ausbeute an Sonnenstrahlen auf die Energie aufnehmende Einheit auftrifft. Die Solar-/Sonnenenergie aufnehmende oder reflektierende Einheit wird dabei häufig von einem Trägersystem gehalten und in weiterentwickelten Anwendungen auch dem Sonnenstand nachgeführt. Aktuell handelsübliche und im Einsatz befindliche Nachführsysteme für solare Anwendungen, die es ermöglichen, Geräte zur Absorption von elektromagnetischen Strahlen, insbesondere Sonnenstrahlen, einer Bahn entsprechend auszurichten, sind meistens zweiachsig ausgeführt, d.h., sie erlauben eine Nachführung um zwei unterschiedliche Achsen, so dass die Fläche der betreffenden Module stets tangential zur Sonne ausgerichtet ist und die von der Sonne kommenden Strahlen also lotrecht auf dem betreffenden Modul auftreffen.

Bspw. beschreibt die DE 294 39 44 aus dem Veröffentlichungsjahr 1981 eine Vorrichtung zum unabhängigen Drehen eines Aggregates um zwei senkrecht zueinander stehende Achsen, insbesondere zum Nachführen von Sonnenkollektoren, wobei die Abtriebswelle einer im Wesentlichen aus einem Gehäuse, einem E-Motor, einem mehrstufigen Planetengetriebe und einer Stirnradstufe bestehenden feststehenden ersten Antriebseinrichtung an einem freien Ende das Gehäuse einer im Wesentlichen aus dem Gehäuse, einem E-Motor, einem mehrstufigen Planetengetriebe und einer Stirnradstufe bestehenden drehbaren zweiten Antriebseinrichtung trägt, deren senkrecht zur Abtriebswelle der ersten Antriebseinrichtung gerichtete Abtriebswelle an ihren freien Enden die zu drehenden Aggregate trägt.

Während also bei zweiachsig nachgeführten Systemen die Gesamtanordnung jederzeit auch gleichzeitig in vertikaler und horizontaler Richtung (also in Elevation und Azimut) nachgeführt werden kann, ist bei einachsig nachgeführten Systemen dagegen stets nur eine Nachführung in einer einzigen Richtung möglich, also wahlweise entweder nur in einer etwa vertikalen Richtung, auch Elevation genannt, oder nur horizontal, auch azimutal genannt, so zeigt gemäß den Definitionen im aktuellen Stand der Technik also ein einachsig in horizontaler Richtung, d.h., um eine vertikale Achse, nachgeführter Sonnenkollektor bei 0° Azimut direkt gegen Süden, so dass von Süden kommende Sonnenstrahlen optimal auf die Energie aufnehmende Einheit auftreffen, bei -90° direkt gegen Ost, bei -45° direkt gegen Südost, bei +45° direkt gegen Südwest und bei +90° direkt gegen West, während die Neigung gegenüber der Vertikalen solchenfalls unverändert bleiben muss in Ermangelung einer zweiten Dreh- oder Schwenkachse.

Andererseits bietet ein einachsig nachgeführtes System gegenüber einer fest in Richtung Süden montierten Anlage bereits Ertragsvorteile von bis zu 30 %, während mit einer zweiachsigen Nachführung bei einer optimal ausgelegten Anlage sogar bis zu 45 % Mehrertrag erreichbar ist. Zweiachsig nachgeführte Systeme liefern also bessere Erträge, sind aber auch komplexer und damit kostspieliger und störanfälliger. In Anbetracht dieser Zusammenhänge favorisiert die vorliegende Erfindung das Prinzip einer einachsigen Nachführung.

Ein solches Prinzip offenbart das im Jahr 2004 erteilte Patent EP 0 114 240, nämlich ein einachsig linear nachgeführtes System einer Sonnenkollektoranlage mit mindestens einem in Nord-Süd-Richtung orientiertem Torsionsrohr, welches eine Reihe von flachen, rechteckigen Sonnenkollektoren trägt. Eine horizontale Schubstange kann mehrere Reihen von Solarkollektoren verfahren.

Als weiterer Stand der Technik sei das US-Patentdokument US 2011/0023940 A1 genannt, worin ein einachsig nachführbares Kollektorsystem für Sonnenenergie beschrieben ist. Dabei kommt zum Drehantrieb zwar eine Schwenkeinheit zum Einsatz, worin innerhalb eines Gehäuses ein Drehteil verschwenkbar angeordnet ist. Da das Gehäuse das Drehteil an einer Stirnseite umgreift, ist an der dortigen Stirnseite keine Befestigung einer Tragstruktur möglich, sondern nur einseitig an der gegenüber liegenden Stirnseite. Dies führt zu einer sehr komplexen und wenig belastbaren Konstruktion, so dass neben einer Drehantriebseinheit stets mehrere zusätzliche Lagereinheiten erforderlich sind.

Der bisherige Stand der Technik weist, kurz zusammengefasst, generell die folgenden Nachteile und Eigenschaften auf:

1. Aufdach-Anlagenlösungen (engl.: building-integrated) auf Carports oder auf Gebäuden sind laut heutigem Stand der Technik nicht nachgeführt und zumeist fest eingebaut. Nicht nachgeführte Systeme bieten jedoch Nachteile in der Ausbeute.

2. Indach-Anlagenlösungen auf Gebäuden sind laut heutigem Stand der Technik Stand stets mit dem Gebäude verbunden, in der Regel kraftschlüssig, etwa geschraubt oder gedübelt oder über Klicksysteme integriert. Dadurch wird in der Regel die Dachoberfläche (Dachhaut) manipuliert, in der Regel penetriert bzw. kontrolliert beschädigt. Sei es auch, um Befestigungen der Indach-Anlagenlösungen (engl. roof-integrated) gezielt anbringen zu können. Da Dächer stets den Umwelteinflüssen ausgesetzt sind, müssen tiefe Installationslöcher, Bohrungen, Schraubungen, etc. nachträglich abgedichtet werden, oder zumindest so angebracht werden, dass Wind und Wetter nicht nachträglich das Bauwerk schädigen können.

3. Zweiachsig nachgeführte Systeme sind teurer als einachsig nachgeführte Systeme. Zweiachsig nachgeführte Systeme existieren bis heute nur als Freilandanlagen (engl.: free standing). Im Übrigen wird hierbei eine Nachführung der Elevation stets mit sehr speziellen linearen Stellantrieben bewerkstelligt.

4. Generell bieten einachsig nachführbare Systeme einen beschränkten Nachführungsbereich, beispielsweise hinsichtlich der Elevation um eine Achse in Ost-West-Richtung.

5. Alle bisher im Markt erhältlichen Systeme sind stets für eine der folgenden Einsatzgebiete konzipiert: Entweder für freistehende Freilandanlagen (engl.: free standing) oder für Indach-Systeme (engl.: roof-integrated) oder aber für Aufdach-Montage; gebäudeintegriert (engl.: building-integrated). Ein immens großer Nachteil ist es, dass keine Technik der aktuellen Systeme es ermöglicht, eine prinzipiell Anordnung bereitzustellen, die in allen der soeben genannten Einsatzgebieten verwendet werden kann.

Aus der WO 2009/147454 A2 ist eine Nachführeinrichtung Solarpaneele bekannt. Die Nachführeinrichtung umfasst eine Schwenkeinheit mit zwei konzentrischen, ringförmigen Elementen, wobei das äußere ringförmige Element auf seiner Außenseite eine Verzahnung aufweist. Zum Antrieb der Schwenkeinheit kämmt eine Schnecke mit der Verzahnung. Insoweit analoge Nachführeinrichtungen sind auch aus den Schriften CN 201 269 283 Y und US 2009/0229597 A1 bekannt.

Aus der DE 10 2010 014 087 A1 ist eine Vorrichtung zur zweiachsigen Verstellung einer Solarpaneel-Einheit bekannt. Die Vorrichtung umfasst zwei baugleich ausgeführte Schwenkeinheiten mit jeweils zwei zueinander konzentrischen ringförmigen Strukturen. Dabei ist jeweils eine ringförmige Struktur mit einer gemeinsamen Montagebaugruppe verbunden. Hierdurch ist die Vorrichtung besonders wartungsarm und robust.

Aus den Nachteilen des beschriebenen Standes der Technik resultiert das die Erfindung initiierende Problem, die Nachteile des genannten Standes der Technik zu vermeiden, so dass eine kostengünstige, einem Gestirn nachführbare Anlage geschaffen wird, welche sowohl als Erstausrüstung verwendet werden kann, aber auch als Nachrüstsystem auf bestehenden Nutzoder Freiflächen oder Gebäuden.

Die Lösung dieses Problems gelingt durch eine Nachführeinrichtung gemäß Anspruch 1.

Eine Tragstruktur kann nach Art eines relativ großflächigen Rahmens gestaltet sein, um gleichzeitig mehrere flächige Sonnenkollektoren nebeneinander abzustützen, so dass für deren gemeinsame Nachstellbewegung nur ein einziger Antrieb erforderlich ist. Dabei ermöglicht es die Erfindung, eine Tragstruktur im Idealfall symmetrisch oberhalb der erfindungsgemäßen Schwenkeinheit zu positionieren, die zu beiden Seiten des erfindungsgemäßen Schwenktriebs mit jenem verbunden ist. Solchenfalls kann ggf. auf zusätzliche Lagerungen verzichtet werden, weil jedenfalls die statischen Kräfte sich gegenseitig aufheben, denn der Schwerpunkt der Tragstruktur liegt dann stets etwa vertikal oberhalb des Schwenktriebs. In diesem Fall ergeben sich mehrere Vorteile: Einerseits ist es möglich, eine gesamte, mehrere Solarkollektoren haltende Tragstruktur auf nur einer einzigen Schwenkeinheit abzustützen, so dass auf zusätzliche, kostspielige Lagerungen verzichtet werden kann. Ferner kann eine an wenigstens einem zentralen Punkt abgestützte Tragstruktur verhältnismäßig groß gestaltet werden und damit entsprechend viele Solarkollektoren abstützen. Schließlich kann der Unterbau für die betreffende Tragstruktur maximal schlank gestaltet werden, im Idealfall in Form einer einzigen, zentralen Säule. Dies wiederum bietet die Möglichkeit, eine solche Tragstruktur auf vorhandenen Nutz- oder Freiflächen zu installieren, derart, dass der Platz unterhalb der Tragstruktur und neben dem Unterbau anderweitig genutzt werden kann, bspw. als Parkplatz. Andererseits wird damit auch eine ggf. nachträgliche Montage auf Gebäuden ermöglicht, selbst wenn der dort vorhandene Platz kleiner ist als die seitliche Ausladung der Tragstruktur.

Darüber hinaus besteht auch die Möglichkeit, eine derartige Schwenkeinheit zwischen zwei benachbarten Tragstrukturen anzuordnen und diese simultan anzusteuern, so dass sich der Stellaufwand weiter reduziert, indem die Anzahl der benötigten Schwenkeinheiten dann nur halb so groß ist wie die Anzahl der Tragstrukturen. Dabei kann jede Tragstruktur an je einer Anschlussfläche der erfindungsgemäßen Schwenkeinheit drehfest angeschlossen werden.

Eine weitere Reduzierung des Antriebsaufwandes lässt sich erreichen, indem weitere Tragstrukturen angekoppelt werden, bspw. über gemeinsame Lagerungen zwischen benachbarten Tragstrukturen, wobei sich diese Lagerungen sodann bevorzugt auf derselben Hauptachse befinden wie erfindungsgemäße Schwenkeinheit. Es ergibt sich damit eine Reihe von Tragstrukturen, welche allesamt an nur eine einzige Schwenkeinheit angekoppelt sind und von dieser simultan verstellt werden, also mit minimalem konstruktivem Aufwand.

Sollen gar mehrere derartige Reihen von Tragstrukturen jeweils einachsig verstellt werden, so ist eine gegenseitige Kopplung bspw. über Gestänge möglich, wenn die Länge eines derartigen Gestänges etwa dem Abstand zweier benachbarter Tragstruktur-Reihen entspricht. Im Idealfall können sogar über mehrere derartige Gestänge entsprechend viele Tragstruktur-Reihen an die Reihe mit dem Schwenktrieb angekoppelt werden, so dass es möglich ist, ein gesamtes Feld oder zumindest einen größeren Bereich eines Solarfeldes mit nur einem einzigen Schwenktrieb einachsig nachzuführen. Auf diese Weise ist mit einem geringsten konstruktiven Aufwand eine maximale Energieausbeute erzielbar. Dabei ist ein weiterer, wünschenswerter Nebeneffekt, dass ein Schneckentrieb eine vergleichsweise hohe KraftÜbersetzung bei gleichzeitig starker Drehzahl-Untersetzung aufweist, so dass mit einer vergleichsweise geringen Antriebsleistung hohe Drehmomente und Kräfte erzeugt werden können. Darüber hinaus ist ein Schwenktrieb im Idealfall selbsthemmend, d.h., bei starkem Wind oder Sturm verhindert die Geometrie der Schnecke ein Durchziehen der Last und damit eine ungewollte Verstellung der Tragstrukturen.

Die Mittenfreiheit der erfindungsgemäßen Anschlussringe erlaubt es überdies, Kabel od. dgl. zentral hindurchzuführen, so dass auf diesem Weg auch die Zusammenführung der Kontaktierung aller Solareinheiten auf einer oder mehreren, gemeinsam verstellten Tragstruktur(en) sowie deren zentrale Ableitung möglich ist.

Die damit erzielbare Unabhängigkeit von der jeweiligen Flächensituation ist ein Novum. Die genannte Erfindung leistet eine in der Elevation einachsige Nachführung, wobei die Nachstellbewegung entsprechend der scheinbaren Bewegung des anvisierten Gestirns nicht mit linearen Stell- und/oder Antriebsgliedern realisiert wird, sondern mit einer motorisch angetriebenen Schwenkeinheit, die besonders für die Erfordernisse für die Verstellung um einen Elevationswinkel optimiert ist. Dadurch wird es möglich, eine Anordnung bereitzustellen, die in allen drei genannten Einsatzgebieten (als Freilandanlage, zur Aufdachmontage oder gebäudeintegriert) verwendet werden kann. Das System ist gerade wegen der möglichst universellen Einsetzbarkeit verhältnismäßig einfach bzw. modular aufgebaut.

Es hat sich als günstig erwiesen, dass die Solarkollektoren oder -reflektoren als Solarpaneele, Photovoltaikmodule, Spiegel od. dgl. ausgebildet sind. Während nach der hier verwendeten Definition Solarkollektoren sowohl Photovoltaikmodule als auch Heißwasserkollektoren umfassen, sollen mit Solarreflektoren alle Arten von Spiegeln umfassen, wie sie insbesondere im Rahmen größerer solarthermischer Anlagen Verwendung finden. Das gemeinsame Ziel all dieser Anlagen ist, dass die einfallende Sonnenstrahlung zur Energiegewinnung nutzbar gemacht werden soll, während gleichzeitig die dazu benötigte Fläche zumindest teilweise zu anderen Zwecken nutzbar sein soll oder gar die bspw. auf Dächern, Türmen, Masten od. dgl. vorhandene, für die Montage nutzbare Fläche übertreffen kann. Damit können bspw. vorhandene Parkplätze, bspw. vor Einkaufszentren, zur Energiegewinnung genutzt werden, wobei als vorteilhafter Nebeneffekt die starke Aufheizung der geparkten Fahrzeuge im Sommer reduziert wird, während im Winter bspw. das Einschneien der geparkten Fahrzeuge vermieden wird und während der Frühjahrs- und Herbststürme Regen und Hagel von den geparkten Fahrzeugen ferngehalten wird.

Wenn, wie die Erfindung weiterhin vorsieht, die Hauptflächen aller auf einer gemeinsamen Tragstruktur montierten Solarkollektoren oder -reflektoren eben ausgebildet sind und in einer gemeinsamen, verstellbaren Ebene liegen, so ist die Windangriffsfläche auf das notwendige Minimum reduziert. Gleichzeitig vereinfacht sich die Tragstruktur wie auch deren Verstellung und Steuerung.

Die Erfindung erlaubt eine Weiterbildung dahingehend, dass die Anschlussflächen des zweiten Anschlusselements über je ein Rohr oder Gestänge mit einer oder mehreren Tragstrukturen verbunden sind. Während über ein zu der Hauptachse koaxiales Rohr die Schwenkbewegung in axialer Richtung weitergeleitet wird, erlaubt ein Gestänge eine Weiterleitung der Schwenkbewegung parallel zu der Hauptebene der Schwenkeinheit, also sozusagen in radialer Richtung.

Indem beide Anschlussflächen von Befestigungsbohrungen lotrecht durchsetzt sind, können daran bspw. großflächig anliegende Rohrflansche daran festgelegt werden, und zwar je nach Passung der verwendeten Schrauben- und Bohrungsdurchmesser jedenfalls reibschlüssig, bei Übergangspassungen darüber hinaus sogar formschlüssig.

Im Rahmen einer ersten Ausführungsform sind die Befestigungsbohrungen durchgehend ausgebildet. Solchenfalls werden immer zwei Rohrflansche oder Anschlusskörper gleichzeitig angeschraubt, nämlich je ein Anschlusskörper pro Anschlussfläche. Solchenfalls können beide Anschlussrohre nur gemeinsam befestigt und auch wieder demontiert werden.

Anders ist es, wenn die Befestigungsbohrungen als Sacklöcher ausgebildet und wechselweise zu den beiden Anschlussflächen hin offen sind. Dann ist die Verbindung eines Anschlussrohrs unabhängig von dem Verbindungszustand des anderen und kann also auch unabhängig von jenem wieder gelöst werden, bspw. zu Montagezwecken.

Bei der zuletzt beschriebenen Ausführungsform sind die Befestigungsbohrungen vorzugsweise mit einem Innengewinde versehen, damit eine Fixierung ohne Kontermuttern möglich ist.

Die Erfindung erlaubt es, dass mehrere Tragstrukturen zwecks gemeinsamer, synchroner Schwenkbewegung untereinander gekoppelt sind, vorzugsweise über ein Gestänge oder über das zweite Anschlusselement der Schwenkeinheit. Dank der einachsigen Nachführung bleiben die Richtungen der Hauptschwenkachsen aller Tragstrukturen stets unverändert und insbesondere koaxial oder parallel zueinander, so dass eine gegenseitige Kopplung vergleichsweise einfach zu bewerkstelligen ist.

Es hat sich als günstig erwiesen, dass eines der beiden ringförmigen Anschlusselemente an einer Mantelfläche eine rundumlaufende Verzahnung aufweist zur Ankopplung des Drehantriebs.

Bevorzugt handelt es sich hierbei um eine äußere Mantelfläche, welche eine rundumlaufende Verzahnung trägt, zum Verzahnungseingriff mit einer Schnecke. Bevorzugt ist diese Verzahnung durch Bearbeiten des selben ringförmigen Grundkörpers gebildet wie dessen ebene Anschlussfläche, dessen Laufbahn(en) für die Wälzkörper(reihen) und/oder dessen Befestigungsbohrungen, wodurch sich ein Höchstmaß an Präzision erreichen lässt.

Die Erfindung sieht weiterhin vor, dass der Drehantrieb wenigstens einen Motor aufweist, dessen Rotor mit einer Schnecke drehfest gekoppelt oder verbunden ist, welche mit der Verzahnung des äußeren Anschlusselements kämmt. Es kann sich hierbei um einen Hydraulikmotor oder vorzugsweise um einen Elektromotor handeln. Besonders bewährt haben sich präzise regelbare Motoren, bspw. Schrittmotoren oder lagegeregelte Servomotoren.

Bevorzugt ist die Hauptebene der erfindungsgemäßen Schwenkeinheit vertikal ausgerichtet. Diese Hauptebene ist derart orientiert, dass sie von der Hauptachse HA des neigungsverstellbaren Anlagenteils lotrecht durchsetzt wird, so dass die Schwenkeinheit koaxial zu dieser Hauptachse HA montiert und neben deren Antrieb gleichzeitig auch zur Lagerung des neigbaren Anlagenteils dienen kann.

Bevorzugt ist dasjenige ringförmige Anschlusselement mit einer Verzahnung versehen, welches Befestigungsmittel zum Anschluss an das in seiner Neigung gegenüber der Horizontalen verstellbare Anlagenteil, insbesondere die Trag- und/oder Aufnahmestruktur für Solarkollektoren, aufweist. Da dieses Anschlusselement an beiden Stirnseiten je eine ebene Anschlussfläche aufweist, sollte dieses vorzugsweise verzahnte Anschlusselement an keiner Stirnseite von dem anderen Anschlusselement umgriffen werden. Aufgrund dessen verfügt jedes Anschlusselement nur über eine einzige, dem jeweils anderen Anschlusselement zugewandte Fläche, insbesondere Mantelfläche. In dieser Mantelfläche ist sowohl die Verzahnung des verzahnten Anschlusselements angeordnet wie auch die Wälzlagerung(en) zwischen den beiden Anschlusselementen. Damit in die Verzahnung eine Schnecke eingreifen kann, sollte sie sich an einer Außenmantelfläche befinden; idealerweise befindet sie sich also an der äußeren, konvex gewölbten, dem Spalt zugewandten Mantelfläche des radial innen liegenden Anschlusselements. Vorzugsweise sind die betreffenden Elemente - also die Verzahnung einerseits sowie die Laufbahn(en) für die Wälzlagerung(en) andererseits - durch vorzugsweise spanabhebende Bearbeitung oder Formgebung der selben Mantelfläche eines gemeinsamen Anschlusselements gebildet, vorzugsweise des radial innen liegenden Anschlusselements. Unter "radial innen liegendem Anschlusselement" soll in diesem Zusammenhang dasjenige Anschlusselement verstanden werden, dessen von Befestigungsmitteln, insbesondere -bohrungen, durchsetzte Anschlussfläche sich näher an der Drehachse der Schwenkeinheit befindet als die Anschlussfläche des anderen Anschlusselements. Dies wiederum ist derart zu verstehen, dass sich die Befestigungsmittel, insbesondere -bohrungen, des verzahnten Anschlusselements zum Anschluss an die gegenüber der Horizontalen verstellbare Trag- oder Aufnahmestruktur sich radial innerhalb der Verzahnung des verzahnten Anschlusselements befinden, während sich die Befestigungsmittel, insbesondere -bohrungen, des unverzahnten Anschlusselements zum Anschluss an ein Fundament oder einen sonstigen, ortsfesten Unterbau radial außerhalb der Verzahnung befinden. Dies lässt sich wiederum dadurch realisieren, dass sich wenigstens eine Antriebsschnecke strukturell zwischen den beiden ringförmigen Anschlusselementen befindet, also radial außerhalb des inneren Anschlusselements, aber radial innerhalb des äußeren Anschlusselements. Zur Aufnahme einer solchen Schnecke ist der Spalt in dem betreffenden Bereich erweitert, insbesondere indem das radial äußere Anschlusselement nach außen zurückweicht, um für die Schnecke Platz zu schaffen. Daraus resultiert eine Ausbauchung des äußeren, vorzugsweise ortsfest am Fundament oder sonstigen Untergrund oder -bau fixierten Anschlusselements, dessen Innenseite in dem betreffenden Bereich nicht rotationssymmetrisch zur Hauptachse des Schwenktriebs verläuft.

Falls das verzahnte Anschlusselement an einer Stirnseite von dem unverzahnten Anschlusselement umgriffen werden müsste, so sollte andererseits auch das unverzahnte Anschlusselement an einer Stirnseite von dem verzahnten Anschlusselement umgriffen werden. Mit anderen Worten, falls das unverzahnte Anschlusselement eine querschnittlich im Wesentlichen U-förmige Ringstruktur aufweist, so müsste dies auch für das verzahnte Anschlusselement gelten, und beide wären derart ineinander anzuordnen, dass jeweils der einem U-Schenkel entsprechende Ringabschnitt eines Anschlusselements sich innerhalb der rundum laufenden Vertiefung des jeweils anderen Anschlusselements befindet. Dabei könnten die verschiedenen Abschnitte eines derartigen Rings auch getrennt voneinander hergestellt und erst bei der Montage der Schwenkeinheit drehfest zu einem gemeinsamen Anschlusselement miteinander vereinigt werden, bspw. durch Verschrauben. Ein "ringförmiges Anschlusselement" im Sinne der Erfindung muss also nicht unbedingt aus einem einzigen Teil bestehen, sondern kann aus mehreren Teilen zusammengesetzt werden, welche aber schließlich während des Betriebs eine starre Einheit bilden.

Allen oben beschriebenen Ausführungsformen gemeinsam ist, dass die Lagerung für die Schnecke sich an dem mit einem Fundament oder Unterbau festzulegenden Anschlusselement befindet, mit dem Effekt, dass sich die Schneckenachse während des Betriebs nicht verändert. Im fertigen Zustand der betreffenden Anlage schwenkt also die Schnecke bei einer Verstellung nicht mit, sondern bleibt ortsfest fixiert und dreht sich ausschließlich um die eigene Längsachse. Ähnliches gilt auch für den Antriebsmotor, der ebenfalls an dem orts- und drehfest fixierten Anschlusselement oder einem damit verbundenen Getriebe festgelegt, bspw. angeflanscht ist. Dieser bewegt sich während des Betriebs nicht, sondern ausschließlich sein Rotor dreht sich ggf. um seine Längsachse. Dies hat verschiedene Vorteile: Einerseits ist dabei die Führung von Versorgungs- und/oder Steuerleitungen, wie Elektrokabeln oder Hydraulikleitungen, erleichtert, weil dieselben keiner ständigen Verbiegung ausgesetzt sind; andererseits besteht nicht die Gefahr, dass ein derartiger Motor im Laufe seiner Bewegung andere Bauteile behindern oder kontaktieren oder gar beschädigen könnte. Mehr noch - eine Montage oder Haltestruktur, welche die erfindungsgemäße Schwenkeinheit mit einem Unterbau verbindet, könnte an die ausladende Motorstruktur angepasst werden, bspw. indem an - den betreffenden Stellen Ausnehmungen oder gar Durchbrechungen zum . Hindurchtritt des Motors vorgesehen sind.

Sofern das radial innen liegende Anschlusselement verdreht werden soll und zu diesem Zweck mit einer Verzahnung an seiner außen liegenden Mantelfläche versehen ist, so muss/müssen die Laufbahn(en) für die Wälzkörperreihe(n) in axialer Richtung (bezogen auf die Drehachse des Schwenktriebs bzw. auf die Hauptachse HA) gegenüber der Verzahnung versetzt sein. In diesem Fall sind sowohl die Wälzkörperlaufbahnen als auch die Verzahnung an einer gemeinsamen Mantelfläche des radial inneren Anschlusselements angeordnet.

Ein weiterer Vorteil der Erfindung besteht darin, dass der Abstand eines Wälzkörpers zu beiden Stirnseiten des zweiten Anschlusselements einen größeren Abstand aufweist als jeweils zu der betreffenden Stirnseite des ersten Anschlusselements. Diese Maßnahme kann dazu beitragen, das Einfüllen der Wälzkörper zu erleichtern, insbesondere über eine Befüllungsöffnung an dem ersten bzw. äußeren Anschlusselement. Solchenfalls können bei Bedarf die Wälzkörper sukzessive ersetzt werden, ggf. sogar ohne Demontage der Gesamtanordnung.

Weitere Vorteile ergeben sich daraus, dass die Verzahnung des äußeren Rings von einem Gehäuse umgriffen ist. Solchenfalls kann das Eindringen von Schmutzpartikeln und damit eine Beschädigung der Verzahnung vermieden werden.

Indem das Gehäuse und/oder der Spalt zwischen den beiden Anschlusselementen abgedichtet und mit einem Schmiermittel gefüllt ist, insbesondere mit einem Schmierfett, lässt sich ein nahezu verschleißfreier Betrieb und damit eine maximale Betriebsdauer erzielen.

Dank der einachsigen Anordnung ist die Längsrichtung der Hauptachse in horizontaler Ausrichtung festgelegt, so dass sich sehr einfache geometrische Verhältnisse ergeben. Die Hauptachse kann wahlweise in Ost-West-Richtung festgelegt sein oder in Nord-Süd-Richtung. Während in ersterem Fall die Ausrichtung der bestrahlungssensitiven Fläche vor allem der Änderung des jahreszeitlichen Höchststandes der Sonne angepasst werden kann, lässt sich diese Fläche mit einer Anordnung nach der letztgenannten Variante vor allem dem scheinbaren, täglichen Lauf der Sonne nachführen.

Die Erfindung sieht weiterhin vor, dass das erste Anschlusselement mittels einer Vielzahl kranzförmig um die Hauptachse verteilt angeordneter, zur Hauptachse paralleler Befestigungsschrauben an einer ortsfest und unbeweglich fixierten Halterung, insbesondere einer Halteplatte, verankert ist, wobei der Zentrumswinkel zwischen benachbarten Befestigungsschrauben gleich oder kleiner ist als 60°, vorzugsweise gleich oder kleiner als 45°, insbesondere gleich oder kleiner als 30°, im Idealfalls sogar gleich oder kleiner als 15°. Damit ergeben sich vergleichsweise kleine Abstände zwischen benachbarten Befestigungsschrauben, was eine hochbelastbare Verbindung zur Folge hat.

Die Halteplatte sollte vertikal ausgerichtet und von der ortsfesten Hauptachse lotrecht durchsetzt sein, damit der Dreh- oder Schwenkbewegung keinerlei Kippbewegungen überlagert sind.

Zur Montage auf einem Fundament, Chassis, Rahmen, Stativ, Dreibein, Pylon oder einer Säule kann die Halteplatte mit wenigstens einem unterseitigen Befestigungselement verbunden sein. Aus Gründen der Statik bzw. des Gleichgewichts sollte sich dieses Befestigungselement vertikal unterhalb der Halteplatte befinden.

Die Erfindung lässt sich dahingehend weiterbilden, dass das Befestigungselement wenigstens eine ebene, horizontale Unterseite aufweist, beispielsweise wenigstens eine horizontale Befestigungsplatte oder Befestigungsschiene. Dort wird die Gewichtskraft der auflastenden Konstruktion flächig in das Fundament oder den sonstigen Unterbau abgeleitet.

Für die Erfindung ist weiterhin charakteristisch, dass die Halteplatte mit wenigstens einer Befestigungsplatte oder -schiene durch ein oder vorzugsweise zwei oder mehrere Verbindungs- und/oder Versteifungselemente mit jeweils mindestens einer von der Halteplatte zu der Befestigungsplatte oder -schiene abwärts geneigt verlaufenden Kante verbunden ist. Damit ergibt sich eine Konstruktion, die sich von der Oberkante oder dem oberen Bereich der vertikalen Halteplatte zu der unterseitigen Befestigungsplatte oder -schiene verbreitert, ähnlich einem auf seiner Basis stehenden Dreieck mit nach oben weisender Spitze. Eine solche Anordnung ist in höchstem Maße stabil, insbesondere beigesteif.

Ferner entspricht es der Lehre der Erfindung, dass eine die Tragstruktur tragende Schwenkeinheit und/oder Lagerung einen Abstand zu der darunter liegenden Oberfläche aufweist, der gleich oder größer ist als die halbe Erstreckung einer Tragstruktur quer zu deren Hauptachse, so dass darunter noch Raum für eine anderweitige Nutzung verbleibt, insbesondere als Parkplatz. Je nach Art der Nutzung sollte der Abstand die halbe Erstreckung der Tragstruktur quer zu deren Hauptachse um ein Maß übertreffen, welches der für die Nutzung benötigten Maximalhöhe entspricht. Beispielweise sollte dieses Maß bei einer Nutzung der darunter liegenden Fläche als Parkplatz für PKW wenigstens etwa 2,5 m betragen, damit selbst bei einer maximal steil gestellten Tragstruktur darunter noch PKW - ggf. mit Dachgepäckträgern - ausreichenden Platz vorfinden.

Die Erfindung umfasst darüber hinaus eine verstellbare Anlage mit wenigstens einer um eine horizontale Hauptachse einachsig verstellbaren Tragstruktur, beispielsweise zur Aufnahme eines oder mehrerer Solarpaneele oder Photovoltaikmodule, um deren Elevationswinkel zu ändern, beinhaltend bzw. aufweisend wenigstens einen Drehantrieb zur aktiven, rotatorischen Verstellung der Tragstruktur um die horizontale Hauptachse, der als Schwenkeinheit ausgebildet ist mit zwei zueinander konzentrischen Ringen, welche aneinander gelagert und zur gegenseitigen Relativverstellung mit mindestens einem Motor oder Antrieb gekoppelt sind oder koppelbar sind, wobei ein erster dieser Ringe der ortsfesten Fixierung an einem Sockel, Ständer oder dergleichen dient und ein zweiter dieser Ringe mit der Tragstruktur drehfest gekoppelt wird, wobei der zweite dieser Ringe zwei Anschlussflächen an einander gegenüber liegenden Stirnseiten aufweist, welche gegenüber dem ersten dieser Ringe in axialer Richtung, insbesondere entlang der Hauptachse, parallel versetzt sind.

Im Folgenden wird insbesondere auf Ausführungsformen der Erfindung eingegangen, welche einen mit planaren Elementen oder Flächen bestückten Gestellrahmen (Aufnahmestruktur) verwenden, wobei diese über Koppelung mit einer durch einen Schwenkantrieb in Drehung versetzte Tragstruktur in Elevationsrichtung geschwenkt werden kann. Dabei sollen zwei grundlegende Ausprägungen der Erfindung voneinander unterschieden werden, die aber dennoch auf den selben, oben genannten Prinzipien basieren und daher jeweils mit den gleichen, modularen Grundelementen realisierbar sind:

Die erste Ausprägung soll im Folgenden als "Leichte Struktur" bezeichnet werden und sieht die Anwendung der soeben genannten Grundelemente in einem System vor, welches durch ein sehr leichtes Gestell, in der Regel aus Leichtmetall, Aluminium oder von ähnlich leichter Gestaltung, getragen wird. Dieses Gestell bildet den Unterbau und ist häufig auch als fachwerkähnliche Tragstruktur ausgeführt. Auf diesem leichten Gestell angebracht und von diesem leichten Gestell auf eine zumeist vergleichsweise geringe Höhe H gebracht ist mindestens eine Schwenkeinheit montiert, welcher die Drehung wenigstens einer Tragstruktur um eine Hauptachse zwecks Realisierung einer Elevationsbewegung obliegt.

Die zweite Ausprägung mit der im Folgenden verwendeten Bezeichnung: "Massive Struktur" sieht die Anwendung der oben genannten Grundelemente in einem System vor, welches von wenigstens einem Rohr oder einer massiven Säule oder Stütze, in der Regel einem Pylon aus Stahl, Stahlbeton, rohrförmigem Gussstahl oder dergleichen ähnlich massive Gestaltung, getragen wird. Diese Säule bzw. dieser Pylon, welcher in dessen Inneren entweder als Hohlkörper (Rohr) oder als Vollmaterial ausgeführt ist, bildet den Unterbau und kann mittig, als auch außermittig unter der zu tragenden Aufnahmestruktur angeordnet sein. Auf dieser Säule / Stütze bzw. auf diesem Pylon angebracht und von dieser auf eine mittlere bis große Höhe H gebracht ist mindestens eine Schwenkeinheit montiert, welche die Drehung einer Tragstruktur um eine Hauptachse zwecks Realisierung einer Elevationsbewegung bewirkt. Benötigt wird bei dieser Ausprägung beispielsweise nur eine einzige Säule, rohrförmige Stütze oder ein Pylon (umgangssprachlich: Stütze) für eine tragende Aufnahmestruktur, die das Tragen einer Gesamtfläche in der Größenordnung von bis zu 400 m$^2$ (definiert durch die Fläche $F = B * T$, bei einer Breite B und einer Tiefe T) ermöglicht. Allgemein gilt: Je massiver die Stütze ausgebildet wird, desto mehr Masse darf die Aufnahmestruktur problemlos tragen, ohne dass deren Stabilisierung Probleme bereitet oder die Schwenkbarkeit der Aufnahmestruktur und der daran befestigten Elemente oder Module zum Erliegen kommt.

Ein erster Vorteil der Erfindung, beispielsweise realisiert bei der leichten Struktur, besteht in folgendem: Aufdach-beziehungsweise Indach-Anlagenlösungen auf Gebäuden, insbesondere auf Flachdächern, sind laut heutigem Stand der Technik stets mit dem Gebäude verbunden, in der Regel kraftschlüssig, etwa geschraubt oder gedübelt oder über Klicksysteme integriert. Mit der Erfindung lassen bei denen Aufdach- beziehungsweise Indach-Anlagenlösungen durch ihr Eigengewicht, ggfs. mit zusätzlichen Beschwerungsgewichten mit ausreichender Stabilität positionieren. Hierbei ist es demnach nicht mehr nötig, tiefe Installationen in der Dachfläche zu gründen, wie etwa Bohrungen für Verschraubungen, anzubringen, denn über einfach befestigbare Fußschienen können mehrere planare Elemente (Solarpaneele oder PV-Module) geeignet nebeneinander und vor Allem auch hintereinander positioniert und mittels Gewichten beschwert werden. Beispielweise können dazu Beton(form)steine als Gewicht herangezogen werden, oder auch Sandsäcke, oder metallische Formkörper, welche sich so über die Fußschienen des Unterbaus legen, dass diese formschlüssig in Position gehalten werden und somit unverrutschbar befestig sind. Die Anordnung wird durch das Eigengewicht und die geeignete Einstellung an Windlasten sich selbst tragen. Langfristig wird somit ein System bereitgestellt, welches durch die minimal eindringende Art der Montage sehr viel weniger Anlass für etwaige späte Bauwerksschäden bietet, wie ansonsten beispielsweise infolge durch nachhaltiges Einsickern von Feuchtigkeit in das Bauwerk zu befürchten wäre.

Ferner können bisherige Freiflächen, etwa Parkplätze, Wiesen- und Feldflächen, Freiflächen vor Geschäften und Supermärkten, etc., durch die Erfindung nachgerüstet werden. Die Säulen, Pylone, Stützen od. dgl. können in den bisherigen Frei- oder Grünstreifen platziert werden. Daher gibt es keinen nennenswerten Platzverlust an nutzbarer Fläche, oder selbiger wird jedenfalls minimiert, weil - beispielsweise auf Parkplatzflächen - stets Bereiche existieren, die von vornherein nicht asphaltiert oder bepflastert werden, etwa um eine Beabstandung nebeneinander liegender Parkreihen zu realisieren; in eben diesen nicht asphaltierten oder bepflasterten Frei- oder Grünstreifen können die Säulen, Pylone, Stützen aufgestellt werden.

Die das System tragende Aufnahmestruktur kann auf einem direkt mittig und zentral angebrachten Unterbau aufgeständert werden, wobei der horizontale Abstand $\Delta$ zwischen der Mitte der Aufnahmestruktur bzw. deren Schwerpunkt und einem bspw. säulenförmigen Unterbau dann etwa gleich Null ist: $\Delta = 0$. Wenn jedoch der Unterbau um einen Abstand $\Delta \neq 0$ von dem Schwerpunkt der Aufnahmestruktur versetzt angeordnet ist, so mag daraus zwar eine gewisse Asymmetrie resultieren; diese kann aber in Grenzen gehalten oder ggf. durch Gegengewichte kompensiert werden. Diese variable Nutzbarkeit des vorhandenen Platzangebotes ist in der Praxis ein immenser Vorteil, da bestehende Flächen gut und möglichst zweckerhaltend nachgerüstet werden können.

Die mit der Erfindung ausgestattete Anlage kann im Rahmen einer multifunktionalen Nutzung Schutz vor Wind und Wetter bieten. Im Sommer kann die Anlage, beispielsweise wenn die Anlagen auf Freiflächen in der Nähe von Supermärkten aufgestellt wird, etwa auf einem Parkplatz für Fahrzeuge, mit den ausladenden flächigen Solarmodulen als Sonnenschutz für darunter parkende Fahrzeuge verwendet werden. Da die ausladenden flächigen Solarmodule stets so gestellt werden, dass Sie die Sonnenenergie im Rahmen der Verstellung möglichst optimal maximal absorbieren/aufnehmen, existiert stets ein großflächiger Verschattungsbereich (VB) auf dem Boden, bzw. auf der durch Oberkante (OK) des Geländes oder des Gebäudes. Fahrzeuge oder andere Gerätschaften, welche in diesem Verschattungsbereich geparkt, abgestellt oder positioniert werden, sind vor starker Erwärmung/ Aufheizung durch Sonnenenergie geschützt. Im Herbst- und Winter sind die geparkten Fahrzeuge unter den ausladenden flächigen Solarmodulen vor Wind und Wetter, insbesondere vor Niederschlag, Regen, Schnee, Schauer, stets besser geschützt als Fahrzeuge, welche komplett im Freien parken.

Bei Verwendung der mit der Erfindung ausgestatteten Anlage auf landwirtschaftlichen Nutzflächen wird dadurch, dass keine komplette Abschattung der Sonne stattfindet, starke Sonneneinstrahlung nur teilweise durchgelassen. Unterhalb des erfindungsgemäßen Solar-Trackers ist landwirtschaftlicher Anbau möglich. Insbesondere bei Einsatz der mit der Erfindung ausgestatteten Anlage in ariden Gebieten oder wüstennahen Gebieten kann dadurch Landwirtschaft oftmals überhaupt erst ermöglicht werden, indem die Sonnenhitze von dortigen Pflanzen ferngehalten wird und also die Wasserverdunstung reduziert wird.

Teile, vor allem nicht bewegte Teile des Unterbaus der mit der Erfindung ausgestatteten Anlage, können multifunktional genutzt werden, etwa als Informations- oder Werbeträger, etwa wenn die Anlage entlang von Fahrbahnen, oder in der Nähe von Supermärkten aufgestellt wird, oder als Halterungen für eine Beleuchtungseinrichtung. Dies hat bspw. Vorteile entlang von Wegen oder Fahrbahnen oder auf Parkplätzen, welche nachts auszuleuchten sind. In diesem Fall kann man sich teure Lampen wie bspw. Peitschenleuchten od. dgl. einsparen, indem die Beleuchtungseinrichtung direkt an dem Unterbau befestigt wird, bspw. in der unteren Höhenebene zwischen OK G.o.G bis H.

Die Energieausbeute der mit der Erfindung ausgestatteten Anlage wird maximiert, weil der Nachführungsbereich bei Verwendung eines Schwenktriebes zur Nachführung in Elevation wesentlich größer ist als bei Verwendung eines linearen Stell- und Antriebsgliedes zur Abbildung der Elevationsbewegung. Der durch die erfindungsgemäße Anordnung einstellbare Elevationswinkel $\Omega$ kann theoretisch jeden beliebigen Wert zwischen 0° und 360° einnehmen. In der Praxis wird dieser Winkel tatsächlich jedoch ausschließlich durch den Platzbedarf der Konstruktion des Unterbaus eingeschränkt. Praktisch beträgt dieser Wert daher betragsmäßig zwischen $0° \leq |\Omega| \leq 90°$ und absolut zwischen $-90° \leq \Omega \leq +90°$ und ist somit größer als bei Verwendung eines linearen Stell- und Antriebsgliedes zur Ausführung der Elevationsbewegung.

Nachts ist die aufgeständerte Solaranlage aus Gründen der optimalen Gewichtsverteilung zwecks Einsparung von Halteenergie zumeist in der sogenannten Tischstellung, wobei die Solarfläche horizontal ausgerichtet ist. Ein von der horizontalen Ebene aus gemessener Elevationswinkel $\Omega$ beträgt dann exakt 0°. Die gleiche Tischstellung wird aus Sicherheitsgründen dann eingestellt, wenn stürmisches Wetter herrscht, d.h. wenn Windkräfte, die flächig gegen die Solarfläche drücken, einen gewissen Schwellenwert überschreiten. Diese Tischstellung ist im Sinne einer (Default-) Grundeinstellung der aufgeständerten Solaranlage, welche sich die Steuereinheit der Solaranlage prior stets dann wählt, wenn keine exakt definierten Steuersignale zur einachsigen Nachführung des Sonnenstandes anliegen.

Diese Tischstellung wird auch tagsüber dann erreicht, wenn die Sonne im Zenit steht und die Sonnenstrahlen direkt (orthogonal) auf die Solarpaneele auftreffen. Auch dann beträgt der von der horizontalen Ebene aus gemessener Elevationswinkel $\Omega$ exakt gleich 0°.

Die Vandalensicherheit der Anlage ist erhöht, da die bewegten bzw. bewegbaren Elemente zur Realisierung der Elevationsbewegung kompakt eingehaust sind und keine sich in die Länge erstreckenden Stäbe oder Streben verwendet werden müssen, wie diese bei linearen Stellgliedern stets vorhanden sind, welche mehr Platz brauchen. Der kompakte und platzsparende Aufbau des Schwenkantriebs, im Gegensatz zur ausladenden und exponierten Konstruktion linearer Stellglieder, ist weniger anfällig gegen Transportverkehr, Warenverkehr, etc. Bei Verwendung der Erfindung beispielsweise in der Form der sog. massiven Struktur auf einem Parkplatzgelände besteht daher nicht die Gefahr, dass parkende oder fahrende Fahrzeuge oder Lastkraftwagen exponierte Teile der mit der Erfindung ausgestatteten Anlage berühren und somit die Funktionsfähigkeit der Anlage an sich gefährden.

Ein weiterer Vorteil, beispielsweise realisiert bei der massiven Struktur, besteht darin, dass der Unterbau einstückig ausgebildet ist, oder aber auch als mehrstückiges Objekt, dessen Einzelteile dann durch formschlüssige Verbindung oder durch kraftschlüssige Verbindung gefügt sind. Auch eine nicht lösbare Verbindung im Sinne des Verlötens oder Verschweißens ist möglich. Wenn der Unterbau in Form einer Stütze, Säule oder eines Pylons ausgebildet ist, so kann dieser aus mehreren Einzelteilen bestehen, wobei ein oberer Teil des Pylons gegenüber dem unteren Teil des Pylons durch ein Gelenk verkippbar ausgebildet sein kann. Der daraus resultierende Vorteil ist die vereinfachte Art und Weise der Aufständerung: Einzelteile können leichter und separat an Ort und Stelle der Anlagenmontage transportiert und dort zusammengefügt werden. Ferner wird zum Aufständern des Pylons bzw. der Gesamtanlage kein schweres Montagegerät wie etwa ein Autokran benötigt, da die Fixierung des unteren Teil des Pylons durch die Verankerung im Boden geschehen kann und somit nur noch ein geeignetes Mittel, beispielsweise ein Flaschenzug, zum Durchführen der Klappung um das Gelenk im Pylon, eingesetzt werden muss. Dies spart in der Praxis Zeit und Geld.

Nach Maßgabe der Erfindung können einige wenige (Minimum: ein Solarpanel oder PV-Modul) bis sehr viele (Beispiel: Bis zu etwa bis zu einhundert oder sogar mehr dieser einzelnen Solarpaneele oder PV-Module) Solarkollektoren durch nur eine Schwenkeinheit in Elevationsrichtung verstellt werden. Die Verbindung der einzelnen Tragstrukturen in axialer Richtung durch dazu koaxiale oder parallele, dreh- oder torsionsfeste Rohre erfolgen sowie in dazu lotrechter Richtung durch horizontal orientierte Schubstangen, welche mittels jeweils einem Gelenk an den zu schwenkenden Tragstrukturen angelenkt sind, derart, dass durch die motorische Betätigung eines Schwenktriebs, welcher in der Regel etwa in der geometrischen Mitte des Solarpaneelfeldes angeordnet ist, die Schwenkbewegung aller einzelnen Solarpaneele oder PV-Module vollzogen wird.

Ein Pylon oder eine Säule kann sowohl mit einem runden als auch mit einem mehreckigen Querschnitt ausgeführt sein, denn die Querschnittsform des Pylons oder der Säule ist in der Regel nicht maßgeblich für die Wirkung der Erfindung.

Weitere Vorteile ergeben sich bei der Installation der erfindungsgemäßen Anlage auf Gebäuden, insbesondere auf Gebäudedächern. Dort können sich einige wenige Solarpaneele zur Aufnahme von Sonnenenergie befinden oder gar ganze Solarpaneelfelder, bestehend aus mehreren gleichsinnig orientierten Solarpanelen oder PV-Modulen.

Ein zusätzlicher Vorteil wird bei Verwendung einer erfindungsgemäßen Anlage zur Nachrüstung auf ausreichend stabilen Dächern ersichtlich, bspw. bei Flachdächern oder flachen Gebäudeflächen, welche normalerweise nach bisheriger Technik mit fest installierten Solaranlagen bebaut werden. Hierzu bietet sich vor Allem die Leichte Struktur an, sofern die Höhe H ausreichend hoch gewählt wird, wobei der Einsatz der Massiven Struktur bei ausreichender Tragfähigkeit des Gebäudes nicht prinzipiell ausgeschlossen ist. Die auf dem Dach vorhandene Freifläche wird dabei in mehreren, mindestens zwei, Höhenebenen nutzbar. In der ersten Ebene, etwa in der Höhe zwischen OK G.o.G bis H, gemeint ist also die Fläche des Verschattungsbereichs VB der Anlage, können herkömmliche Gebäudeinstallationen, wie TGA, Schutzräume, Abstellflächen, etc. realisiert werden. Die zweite Ebene dient der Nutzbarmachung der Sonnenenergie durch die mit der Erfindung ausgestattete Anlage. Diese Art der zeitgleichen und mehrfachen Nutzbarmachung von Flächen erhöht die generelle Raumnutzbarkeit und hilft damit, Kosten zu sparen, beispielsweise weil vorhandene Flächen effizienter genutzt werden.

Die Steuerimpulse an die einachsige Verstelleinrichtung zur Realisierung der Elevationsbewegung, also die Drehung einer Tragstruktur um eine Hauptachse, werden durch eine separate Steuereinrichtung, insbesondere eine elektronische Steuereinrichtung, erzeugt.

Die mit der Erfindung ausgestattete Anlage kann als Solartankstelle für Elektrofahrzeuge genutzt werden, wenn eine Kopplungsmöglichkeit des Elektrofahrzeuges an den tragenden Elementen der Gesamtanlage, bspw. dem Unterbau, vorhanden ist, so dass eine elektrische Verbindung zu einem Verbraucher, beispielsweise einem elektromotorisch betriebenen Fahrzeug, hergestellt werden kann. Dies ist besonders dann vorteilhaft, wenn sich die erfindungsgemäße Solaranlage auf einem Parkplatz befindet, bspw. vor einem Supermarkt. Dann können die bspw. zum Einkaufen benutzten Elektrofahrzeuge sofort für die Rückfahrt nach Hause wieder aufgeladen werden, insbesondere wenn die Kopplungsmöglichkeit eine Schnelllade-Funktionalität besitzt.

Weiterhin kann in Fußnähe oder in Bodennähe der mit der Erfindung ausgestatteten Anlage wenigstens ein Energiespeicher an- oder untergebracht sein, welcher Zellen oder Module zur (Zwischen-) Speicherung der über Solarpaneele aufgenommenen Energie beinhaltet. Es kann sich dabei um Akkumulatoren oder aufladbare Batteriezellen handeln, aber auch um alle erdenklich anderen derartige Zellen oder Module zur elektrischen oder chemischen Energiespeicherung. Solche Zellen oder Module sind in freigehaltenen Bereichen, sogenannten Kammern, in der Säule oder dem Pylon der mit der Erfindung ausgestattete Anlage, insbesondere im Unterbau einer Tragstruktur, lokalisiert; sie können auch in einem bodennahen Bereich, oder im Boden selbst, unterhalb der mit der Erfindung ausgestattete Anlage angeordnet sein, oder in einem nahen Gebäude.

Ein solcher Energiespeicher bietet die Möglichkeit, dass die gespeicherte Energie auch in Zeiten abgerufen werden kann, wenn keine Sonne scheint, also bspw. nachts.

Eine Maßnahme, wonach eine gemeinsame Montagebaugruppe zwischen beiden Schwenkeinheiten derart ausgebildet ist, dass die beiden Schwenkachsen weder parallel zueinander verlaufen noch rechtwinklig zueinander, hat zur Folge, dass die beiden Schwenkeinheiten, welche jeweils rotationssymmetrisch zu einer Schwenkachse angeordnet sind, nicht rechtwinklig zueinander angeordnet sein müssen, so dass die Anschlüsse einer dieselben miteinander verbindenden Montagebaugruppe eine gewisse, symmetrieähnliche Struktur aufweisen können. Demzufolge läßt sich eine solche Montagebaugruppe erheblich vereinfachen und dadurch kostengünstiger herstellen. Ringförmige Schwenklager werden oft auch als mittenfrei bezeichnet und erlauben daher wahlweise das Durchführen von Kabeln oder die Integration von Antriebsmotoren im Innenraum.

Es hat sich als günstig erwiesen, dass die gemeinsame Montagebaugruppe derart ausgebildet ist, dass wenigstens eine ringförmige Struktur wenigstens einer Schwenkeinheit beide Schwenkachsen mit einem allseitigen Abstand umgreift. Während die eigene Schwenkachse diese Schwenkeinheit koaxial durchläuft, ist die andere Schwenkachse zwar nicht koaxial zu der ringförmigen Schwenkeinheit, aber sie läuft ebenfalls durch diese hindurch; demzufolge befindet sich diese Schwenkeinheit etwa mittig oberhalb der anderen Schwenkeinheit und wird also etwa in ihrem Schwerpunkt unterstützt.

Es liegt im Rahmen der Erfindung, dass sich die beiden Schwenkachsen schneiden, vorzugsweise im Bereich der gemeinsamen Montagebaugruppe, insbesondere innerhalb eines Anschlußteils derselben. Ein gemeinsamer Schnittpunkt stellt ein maximales Maß an Struktursymmetrie her und ist daher aus statischen Gründen wünschenswert.

Betrachtet man die gesamte Vorrichtung zur mehrachsigen Verstellung eines Anlagenteils als Hintereinanderschaltung zweier Schwenkeinheiten mittels mehrerer Anschlußbauteile, so ergibt sich eine Struktur mit verschiedenen, zu je einem Schwenkachsenabschnitt etwa parallelen Abschnitten. Die entlang dieser Abschnitte verlaufenden Schwenkachsenabschnitte schließen in ihrem Schnittpunkt einen Neigungswinkel $\alpha$ miteinander ein, der bevorzugt ein stumpfer Winkel ist, d.h., $\alpha > 90°$.

Der dazu komplementäre Schnittwinkel β zwischen zwei aufeinander projizierbaren Schenkeln der beiden ggf. verlängerten Schwenkachsen sollte gleich 15° sein oder größer, vorzugsweise gleich 30° oder größer, insbesondere gleich 45° oder größer.

Andererseits empfiehlt die Erfindung, dass der komplementäre Schnittwinkel β zwischen zwei aufeinander projizierbaren Schenkeln der beiden ggf. verlängerten Schwenkachsen gleich 75° ist oder kleiner, vorzugsweise gleich 60° oder kleiner, insbesondere gleich 45° oder kleiner.

Ferner sollte die gemeinsame Montagebaugruppe eine oder vorzugsweise zwei flächige, insbesondere ebene Anschlußteil(e) aufweisen. Diese Anschlußteile dienen der Verbindung mit den vorzugsweise ebenfalls ebenen Anschlußflächen der ringförmigen Schwenkeinheiten.

Die Erfindung empfiehlt, dass die Verbindung eines flächigen Anschlußteils mit einem oder vorzugsweisen beiden Schwenktrieben mittels Formschluss oder Kraftschluss erfolgt, insbesondere mittels einer Verschraubung. Eine Alternative ist bspw. das Verschweißen.

Die gemeinsame Montagebaugruppe selbst besteht vorzugsweise aus Metall; sie kann insbesondere aus Metall gegossen oder aus mehreren Metallteilen zusammengeschweißt sein. Eine Metallkonstruktion bietet eine ausreichende Stabilität. Sie eignet sich sowohl für eine Herstellung im Gußverfahren als auch für den Zusammenbau aus Einzelteilen.

Indem die gemeinsame Montagebaugruppe wenigstens ein langgestrecktes Profil mit einem zumindest bereichsweise konstanten Querschnitt aufweist, insbesondere ein gerade verlaufendes, langgestrecktes Profil mit einem zumindest bereichsweise konstanten Querschnitt, läßt sich die Herstellung weiter vereinfachen, indem ein vorgefertigtes Profil mit geeignetem Querschnitt verwendet wird.

Eine besonders kompakte Ausführungsform zeichnet sich dadurch aus, dass die gemeinsame Montagebaugruppe wenigstens ein einfach zusammenhängendes Profil umfaßt, bspw. ein Flacheisen, Winkeleisen, T-Eisen, ein Profil mit Ober- und Unterzug und Mittelsteg, od. dgl.

In einem anderen Fall umfaßt die gemeinsame Montagebaugruppe wenigstens ein Hohlprofil, beispielsweise wenigstens ein gerades Rohr, vorzugsweise wenigstens ein gerades, zylindrisches Rohr, insbesondere wenigstens ein gerades, kreiszylindrisches Rohr. Ein derartiges, zweifach zusammenhängendes Profil hat im allgemeinen eine höhere Stabilität als ein nur einfach zusammenhängendes Profil und damit auch eine höhere Tragkraft.

Die Erfindung sieht vor, dass eine oder vorzugsweise beide Stirnseiten des Profils innerhalb je einer Ebene liegen. Damit ist bereits ein Anschluß an eine ebene Anschlußfläche einer Schwenkeinheit vorbereitet. Dieser könnte nötigenfalls direkt durch Verschweißen erfolgen.

Bevorzugt ist eine Ebene, innerhalb der eine Stirnseite des Profils liegt, von der Längsachse des Rohrs lotrecht durchsetzt. Im Fall eines kreiszylindermantelförmigen Profils folgt die betreffende Stirnseite dementsprechend einer Kreislinie.

Andererseits sollte eine Ebene, innerhalb der eine Stirnseite des Profils liegt, von der Längsachse des Rohrs nicht lotrecht durchsetzt sein. Dies hat zur Folge, dass Im Fall eines kreiszylindermantelförmigen Profils die betreffende Stirnseite einer Ellipse folgt, entsprechend einem schiefen Zylinderschnitt. Bei einer Ellipse ist der Radius nicht konstant, sondern variiert zwischen einem Maximalwert bei der großen Halbachse a und einem Minimalwert bei der kleinen Halbachse b: $a \geq r \geq b$.

Wenn an einer oder vorzugsweise beiden Stirnseiten des Profils je eine Befestigungsplatte festgelegt ist, insbesondere bündig an der betreffenden Stirnseite anliegend, so wird eine Verbindung mit den anzuschließenden Schwenkeinheiten weiter erleichtert. Vorzugsweise weist eine solche Befestigungsplatte einen kreisrunden Außenumfang auf, entsprechend der kreisringförmigen Geometrie von üblichen Schwenkeinheiten. Der Radius des Außenumfangs ist jedenfalls gleich oder größer als der maximale Radius der betreffenden Stirnseite des Verbindungsteils. Falls eine innere Ausnehmung in der Befestigungsplatte vorgesehen ist, bspw. zur Durchführung von Kabeln oder zur Aufnahme von Baugruppen, so hat eine solche Ausnehmung vorzugsweise ebenfalls einen kreisförmigen Innenumfang mit einem Radius, der gleich oder kleiner ist als der minimale Radius der betreffenden Stirnseite des Verbindungsteils.

Eine weitere Möglichkeit zur Verbindung zwei Schwenkeinheiten mit gegeneinander geneigten Schwenkachsen durch eine Montagebaugruppe besteht darin, die mit den beiden Schwenkeinheiten zu verbindenden Befestigungsplatten jeweils mit einem vorzugsweise kreiszylindermantelförmigen Rohransatz zu versehen und dieselben sodann miteinander zu verbinden. Dies hat den Vorteil, dass die an je eine Befestigungsplatte grenzenden Stirnseiten einem kreisförmigen Verlauf folgen können, wenn jede Befestigungsplatte von der Längsachse des betreffenden Rohransatzes jeweils lotrecht durchsetzt wird.

Dabei können die beiden Rohransätze durch Aneinandersetzen ihrer beiden freien Stirnseiten miteinander verbunden werden, wenn deren Ebenen von der betreffenden Schwenkachse unter jeweils gleichen Winkeln durchstoßen werden. Die aneinanderzusetzenden Stirnseiten folgen dann nämlich jeweils einer Ellipse mit jeweils gleicher großer Halbachse a und jeweils gleicher kleiner Halbachse b. Sodann ist es nur erforderlich, die beiden Stirnseiten miteinander zu verschweißen. Andererseits wäre es auch denkbar, an jeder der beiden aneinander stoßenden Stirnseiten jeweils eine Platte anzuschweißen mit flanschartig überstehenden Rändern, und diese Flansche dann aneinanderzuschrauben. Dies hat den Vorteil, dass die Montagebaugruppe an dieser Stelle - bspw. zum Austausch einer Baugruppe - voneinander zu trennen.

Alternativ lassen sich die beiden jeweils konzentrisch zu je einer Schwenkachse verlaufenden Rohransätze einer Montagebaugruppe auch dadurch miteinander verbinden, dass der gewölbte Mantel eines Rohransatzes - vorzugsweise des die obere Schwenkeinheit unmittelbar abstützenden Rohransatzes - auf einer entsprechend dreidimensional gewölbten Stirnseite des anderen Rohransatzes - vorzugsweise des unteren Rohransatzes - aufliegt und mit dieser verbunden ist, bspw. verschweißt. Obzwar dazu die dreidimensional gewölbte Stirnseite einer sattelförmig gewölbten Kurve folgt, läßt sich dies mit moderner Fertigungstechnik - insbesondere mittels computergesteuertem Laserschneiden - problemlos herstellen. Dies hat den Vorteil, dass die freie Stirnseite des aufliegenden Rohransatzes frei zugänglich ist. Von dort hat man also einen Zugang zu dem Innenraum der oberen Schwenkeinheit. Sofern in diesem Rohransatz ein Antriebsmotor angeordnet ist, wäre er der Witterung nicht ausgesetzt, da das betreffende Rohr nach abwärts geneigt ist. Außerdem kann diese freie Stirnseite durch einen anflanschbaren Deckel verschlossen werden, ggf. sogar unter Einlegen einer Gummidichtung. Sofern das betreffende Rohr an beiden Enden gerade abgelängt wird - also derart, dass die Schnittebenen jeweils lotrecht von der betreffenden Schwenkachse durchsetzt werden - so hat der Verschlußdeckel ggf. einen kreisförmigen Umfang und ist also ebenfalls besonders einfach herstellbar. An einem solchen Deckel kann ggf. ein Stromanschlußkasten od. dgl. montiert werden.

Um eine Verbindung mit einer Schwenkeinheit zu ermöglichen, kann wenigstens eine Befestigungsplatte jeweils mehrere Befestigungsbohrungen aufweisen, welche insbesondere kranzförmig das betreffende Profil mit einem allseitigen Abstand umgebend angeordnet sind. Dies korrespondiert mit der Anordnung von Befestigungsbohrungen in den ebenen Anschlußflächen der verwendeten Schwenkeinheiten.

Obzwar auch eine Verbindung mittels Nieten denkbar wäre, bevorzugt die Erfindung, dass wenigstens eine Befestigungsplatte mittels jeweils mehrerer, die Befestigungsbohrungen durchgreifender Schrauben an einer ringförmigen Struktur einer Schwenkeinheit angeflanscht ist. Solche Schrauben lassen sich einerseits mit einem definierten Drehmoment anziehen und erlauben andererseits ein problemloses Austauschen einer Schwenkeinheit.

Weitere Vorteile ergeben sich daraus, dass beide Schwenkeinheiten dieselbe Struktur aufweisen oder gar baugleich sind. Da beide Schwenkeinheiten näherungsweise das selbe Gewicht tragen müssen und etwa vergleichbaren Kippmomenten ausgesetzt sind, läßt sich die obere Schwenkeinheit entsprechend der unteren, etwas stärker belasteten wählen, wobei man dann im allgemeinen auslegungstechnisch auf der sicheren Seite ist.

Es hat sich bewährt, dass wenigstens eine Schwenkeinheit ein Gehäuse aufweist, das ein- oder mehrteilig ist, insbesondere als ein einziges, gegossenes Gehäuseteil ausgebildet ist oder aus mehreren einzelnen Gehäuseteilen zusammengeschweißt oder -geschraubt ist. Da eine Solaranlage - wofür die Erfindung in erster Linie, jedoch nicht ausschließlich gedacht ist, nahezu ausnahmslos im Freien betrieben wird, ist sie - und also auch die erfindungsgemäße Vorrichtung - jahrelang der Witterung ausgesetzt.

Um deren Unbilden dauerhaft ertragen zu können, ohne dabei Schaden zu nehmen, ist ein vorzugsweise spritzwassergeschütztes und/oder abgedichtetes Gehäuse zu empfehlen.

Die Anordnung sollte derart getroffen werden, dass wenigstens eine ringförmige Struktur einer Schwenkeinheit eine rundum laufende Verzahnung aufweist. Diese stellt den Angriffspunkt für einen Drehantrieb dar zwecks permanenter Ausrichtung von Solarmodulen auf die Sonne.

Eine weitere Konstruktionsvorschrift sieht vor, dass die rundum laufende Verzahnung wenigstens einer ringförmigen Struktur einer Schwenkeinheit aus dem selben Grundkörper gearbeitet ist wie wenigstens eine daran angeordnete Laufbahn für Wälzkörper. Dies hat gegenüber einlegbaren Laufbahnsegmenten den Vorteil, dass die Wälzkörper nicht ständig über Stöße zwischen aneinandergrenzenden Laufbahnsegmenten rollen müssen, und dient also einer Verlängerung der erzielbaren Betriebsdauer.

Die Ankopplung einer Antriebseinheit kann dadurch erfolgen, dass mit der rundum laufenden Verzahnung wenigstens ein Ritzel und/oder wenigstens eine Schnecke kämmt. Während eine Schnecke ausschließlich an einer Außenverzahnung angreifen kann, läßt sich ein Ritzel neben einer Außenverzahnung bei Bedarf ggf. auch mit einem innenverzahnten Ring in Eingriff bringen.

Sofern wenigstens ein Ritzel oder wenigstens eine Schnecke mit einer Brems- und/oder Halteeinrichtung gekoppelt oder koppelbar ist, kann eine einmal angefahrene Position durch Einrücken einer derartigen Brems- und/oder Halteeinrichtung arretiert werden, und der Antriebsmotor kann abgeschalten werden, bspw. um Strom zu sparen. So ist bspw. ein "digitales" Nachsteuern möglich, ähnlich einem Zwei-Punkt-Regler, der den Antrieb einschaltet, wenn die Abweichung der eingestellten Ausrichtung von dem aktuellen Sonnenstand einen Grenzwert überschreitet, und welcher den Antrieb ausschaltet, wenn die aktuelle Ausrichtung dem aktuellen Sonnenstand entspricht oder gar einen voreingestellten Grenzwert mit entgegengesetztem Vorzeichen erreicht hat. Als Bremseinrichtung wird eine bevorzugt elektromechanisch oder ggf. hydraulisch ansteuerbare Bremse empfohlen.

Wenigstens ein solches Ritzel seinerseits oder wenigstens eine solche Schnecke ihrerseits sollte mit der Abtriebswelle eines Antriebsmotors, insbesondere eines Hydraulik- oder Elektromotors, gekoppelt oder verbunden sein und von diesem angetrieben werden. Die Auswahl der Antriebsenergie - Strom oder Hydraulik - richtet sich meist nach den Umständen, insbesondere nach den ohnehin verfügbaren Einrichtungen. Bevorzugt wird die selbe Antriebsenergie - Strom oder Hydraulik - verwendet wie für eine Bremseinrichtung.

Im Rahmen der Erfindung ist es möglich, das Gehäuse des Antriebsmotors außen an dem Gehäuse oder dem unverzahnten Ring der betreffenden Schwenkeinheit festzulegen, insbesondere anzuflanschen. Dort ist die Energiezuführung mittels Elektrokabel oder Hydraulikleitung äußerst einfach. Während bei der jeweils unteren Schwenkeinheit bevorzugt das mit dem Motorgehäuse verbundene Teil - Gehäuse oder unverzahnter Ring - mit dem feststehenden Sockel verbunden ist, so dass der Motor während des Betriebs seine Position nicht verändert und also bequem an die Energiezufuhr angeschlossen werden kann, schwenkt die obere Schwenkeinheit - und damit der mit ihrem Gehäuse oder unverzahnten Ring verbundene Antriebsmotor - je nach Drehstellung der unteren Schwenkeinheit um deren vertikale Schwenkachse und muß demnach über ein flexibles Element angeschlossen werden, also ein flexibles Elektrokabel einerseits oder einen biegsamen Hydraulikschlauch andererseits.

Bei der zuvor beschriebenen Ausführungsform befindet sich die Verzahnung bevorzugt an dem Außenumfang der äußeren, ringförmigen Struktur der betreffenden Schwenkeinheit, insbesondere dann, wenn diese an ihrer Außenseite von einem Gehäuse umgeben ist. Solchenfalls bietet es sich an, zum Antrieb eine Schnecke zu verwenden, die einerseits eine stärkere Untersetzung als ein Ritzel bietet, weil bei einer Motorumdrehung der verzahnte Ring sich nur um einen Zahn weiter bewegt, während er sich bei einem Ritzel pro Motorumdrehung um dessen Zähnezahl weiterbewegt, und die obendrein bei manchen Ausführungsformen sogar selbsthemmend ist, so dass eine Bremseinrichtung unter Umständen verzichtbar ist.

Gemäß der Erfindung ist die Verzahnung an dem Innenumfang der inneren, ringförmigen Struktur der betreffenden Schwenkeinheit angeordnet. Dadurch läßt sich ggf. der von der Vorrichtung benötigte Platzbedarf minimieren.

Bei der Erfindung bietet es sich an, dass mit der Verzahnung kämmende Ritzel oder Zahnräder innerhalb des Gehäuses der betreffenden Schwenkeinheit angeordnet sind, insbesondere geführt oder gelagert. In diesem Falle sollte sich das Gehäuse der betreffenden Schwenkeinheit weiter nach radial innen erstrecken als der verzahnte Innenring. Das Gehäuse könnte sogar - zumindest an einer Grundseite der Schwenkeinheit - als Kreisscheibe ausgebildet sein, also ohne Ausnehmung in der Mitte.

Die Erfindung läßt sich dahingehend weiterbilden, dass ein oder mehrere, mit der Verzahnung kämmende Zahnräder Bestandteile eines Planetengetriebes sind, insbesondere dessen Planetenräder, wobei die Verzahnung die Aufgabe des Hohlrades übernimmt. Ein Planetengetriebe stellt eine konzentrische Anordnung dar und ist demnach frei von einer systemimmanenten Unwucht.

Besondere Vorzüge ergeben sich, wenn ein solches Planetengetriebe nach Art eines Wolfromgetriebes aufgebaut ist, also mit einem entlang einer Hauptebene geteilten Hohlrad, dessen Teile eine geringfügig abweichende Zähnezahl aufweisen. Damit läßt sich eine extreme Drehzahluntersetzung von dem Antriebsmotor zu dem davon angetriebenen Ring der betreffenden Schwenkeinheit realisieren. Dies wiederum ist vorteilhaft für eine besonders präzise Positionierung einer Solaranlage entsprechend dem aktuellen Sonnenstand.

Sofern das Sonnenrad eines solchen Planetengetriebes mit der Abtriebswelle eines Antriebsmotors, insbesondere eines Hydraulik- oder Elektromotors, gekoppelt oder verbunden ist, kann es von diesem angetrieben werden. Das Motorgehäuse läßt sich dabei an dem Gehäuse der betreffenden Schwenkeinheit festlegen, vorzugsweise konzentrisch zu der betreffenden Schwenkachse.

Der Antriebsmotor läßt sich innerhalb eines Sockels oder innerhalb der gemeinsamen Montagebaugruppe oder innerhalb einer oberseitigen Stützbaugruppe anordnen und ist dadurch äußeren Einflüssen - sowohl der Witterung als auch Vandalismus od. dgl. - weitestgehend entzogen.

Schließlich entspricht es der Lehre der Erfindung, dass das Gehäuse des Antriebsmotors an einem Sockel oder an der gemeinsamen Montagebaugruppe oder an einer oberseitigen Stützbaugruppe oder an einem Gehäuse oder Gehäuseteil einer Schwenkeinheit festgelegt ist, insbesondere angeflanscht. Ein angeflanschter Motor kann bei Bedarf ohne Komplikationen ausgetauscht werden.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:

Fig. 1    eine Nachführeinrichtung für eine einachsig mittels Schwenktrieb in Elevationsrichtung nachgeführte Solaranlage in schematischer Seitenansicht, beispielhaft dargestellt in drei verschiedenen Positionen, nämlich vormittags (Position a), mittags (Position b) und nachmittags (Position c), wobei der Winkel der Nachführung in Elevationsrichtung jeweils vom Sonnenstand und der Tageszeit abhängig ist;

Fig. 2, 2a    eine Draufsicht auf eine Freifläche, beispielsweise einen Parkplatz, worauf mehrere Solaranlagen installiert sind, in schematische Darstellung;

Fig. 3    eine detailliertere Darstellung der Solaranlage nach Fig. 1 in einer perspektivischen Ansicht;

Fig. 4    einen Ausschnitt aus Fig.3, mit dem oberen Teil des Unterbaus und der dortigen Schwenkeinheit;

| Fig. 5 | den Unterbau einer abgewandelten Ausführungsform, teilweise abgebrochen; |
| Fig. 6 | eine wiederum abgewandelte Ausführungsform in einer etwa der Fig. 3 entsprechenden Ansicht, teilweise abgebrochen; |
| Fig. 7a, 7b | verschiedene Ausführungsformen der Erfindung, wobei die Zusammenschaltung mehrerer Tragstrukturen in perspektivischer Darstellung wiedergegeben ist; |
| Fig. 8 | eine abermals veränderte Ausführungsform in einer perspektivischen Ansicht schräg von oben, wobei die Umrisse der Solarkollektoren nur angedeutet sind; |
| Fig. 9a | eine wiederum geänderte Ausführungsform einer Tragstruktur in einer perspektivischen Ansicht, mit einer mehrteiligen, fachwerkähnlichen Aufständerungsstruktur, die durch mehrere Beschwerungselement fixiert ist; |
| Fig. 9b | ein in Fig. 9a verwendetes Beschwerungselement in vergrößertem Zustand; |
| Fig. 9c | ein perspektivische Darstellung eines durch Zusammenschaltung mehrerer Tragstrukturen nach Fig. 9a gebildeten Solarfeldes, wobei mehrere Solarpaneele vor- und nebeneinander aufgereiht sind; |
| Fig. 10a-10d | eine nochmals abgewandelte Ausführungsform in verschiedenen Ansichten und Positionen; |
| Fig. 10e, 10f | eine letzte Ausführungsform der Erfindung in unterschiedlichen Ansichten und Positionen; |
| Fig. 11 | eine Nachführeinrichtung in einer perspektivischen Ansicht, wobei verschiedene Schwenkstellungen mit ausgezogenen, gestrichelten sowie strichpunktierten Linien dargestellt sind; |
| Fig. 12 | eine Seitenansicht auf die Fig. 11; |
| Fig. 13 | einen Vertikalschnitt durch eine erfindungsgemäße Ausführungsform einer Schwenkeinheit zur Verwendung in der Vorrichtung nach Fig. 11 und 21; |
| Fig. 14 | einen Horizontalschnitt durch die Fig. 13; sowie |
| Fig. 15 | eine Darstellung entsprechend der Fig. 12, wobei die Schwenkeinheiten entlang ihrer vertikalen Hauptebene aufgeschnitten sind; |

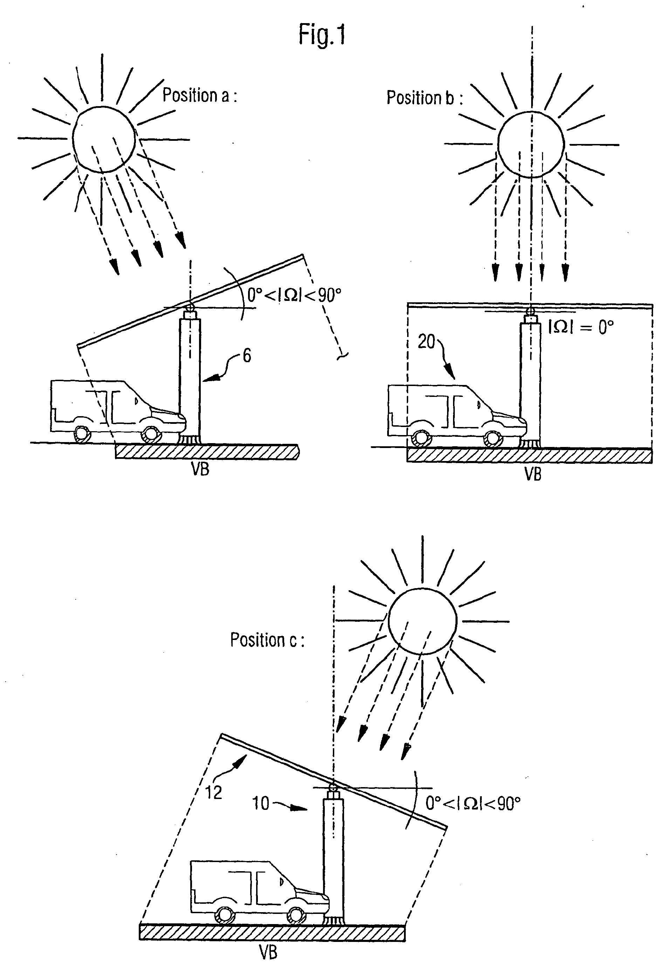

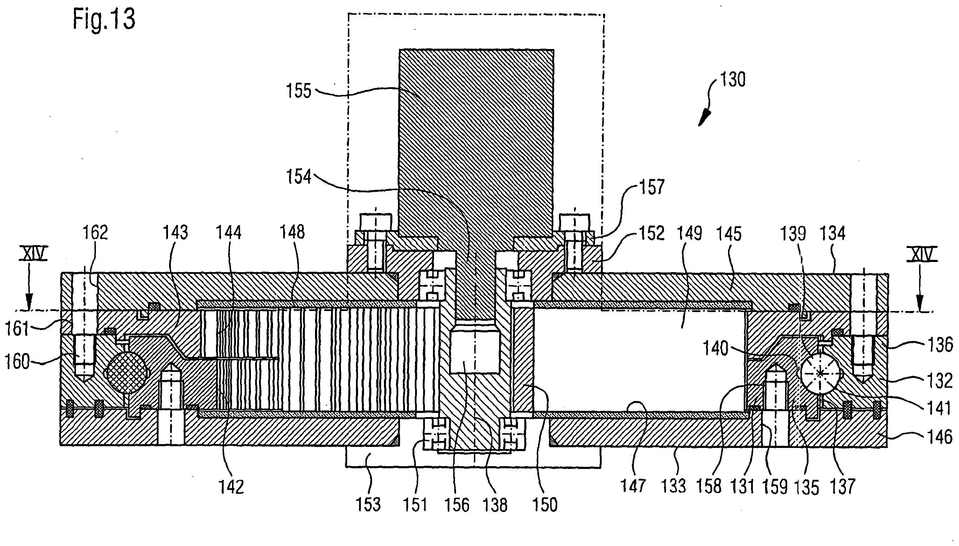

Die Erfindung bezieht sich auf die Nachführeinrichtung, die in den Figuren 13-15 dargestellt ist. Die Ausführungen gemäß den Figuren 1-12 sind Beispiele, die zum Verständnis der Erfindung nützlich sind.

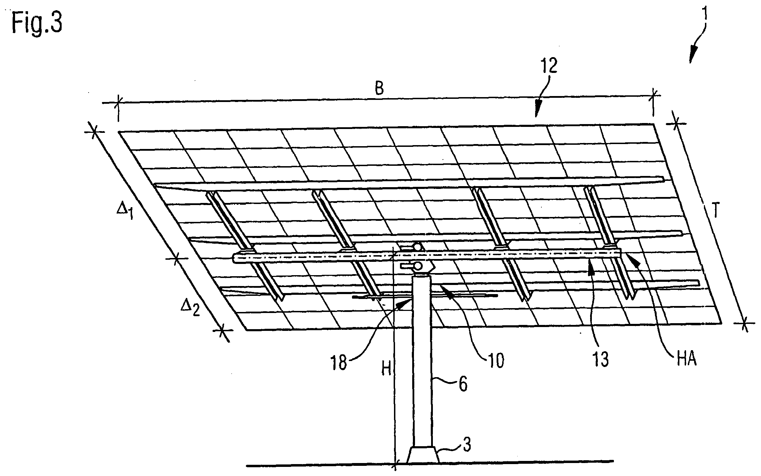

Fig. 1 und 3 zeigt eine Solaranlage mit einer Nachführeinrichtung 1. Eine Aufnahmestruktur 12 für flächige Solarkollektoren 2 ist mittels eines Schwenktriebs 10 auf einer Säule 6 als Unterbau abgestützt, deren Fußelement 3 bspw. im Boden verankert ist. In Fig. 1 verläuft die Hauptachse HA der Schwenkeinheit 10 lotrecht zur Papierebene. In der Papierebene ist dort der jeweilige Elevationswinkel $\Omega$ aufgetragen, also derjenige Winkel, welchen die geneigte Solarfläche mit der Horizontalen einschließt.

Die aufgeständerte Solarfläche wird vermittels der Schwenkeinheit 10 von einer Steuerung möglichst derart nachgeführt, dass sie in der Regel ständig rechtwinklig zu den auftreffenden Sonnenstrahlen ausgerichtet bleibt.

Wie Position a zeigt, ist demzufolge der Elevationswinkel $\Omega$ im dargestellten Beispiel vormittags größer als 90°, mit abnehmender Tendenz; mittags, in der sog. Tischstellung, ist der Elevationswinkel $\Omega$ gleich 0°, und nachmittags nimmt er negative Werte an.

In Fig. 1 dargestellt ist ferner der jeweils resultierende Verschattungsbereich VB, der im Laufe des Tages mit dem Sonnenstand wandert, infolge der erfindungsgemäßen Nachführung aber hinsichtlich seiner Erstreckung ein Mindestmaß nicht unterschreitet, welches durch die Tiefe T (vgl. Fig. 3) des mit der Aufnahmestruktur 12 aufgeständerten Solarpaneelfeldes 2 definiert ist, und somit über den ganzen Tag hinweg Schatten spendet.

In Fig. 1 gut sichtbar sind auch die Nutzungsmöglichkeiten, die sich bei entsprechend großer Höhe H des säulenförmigen Unterbaus 6 ergeben, etwa die Nutzung der Fläche unterhalb der aufgeständerten Solarfläche als schattiger oder teilverschatteter Parkplatz für parkende Fahrzeuge 20.

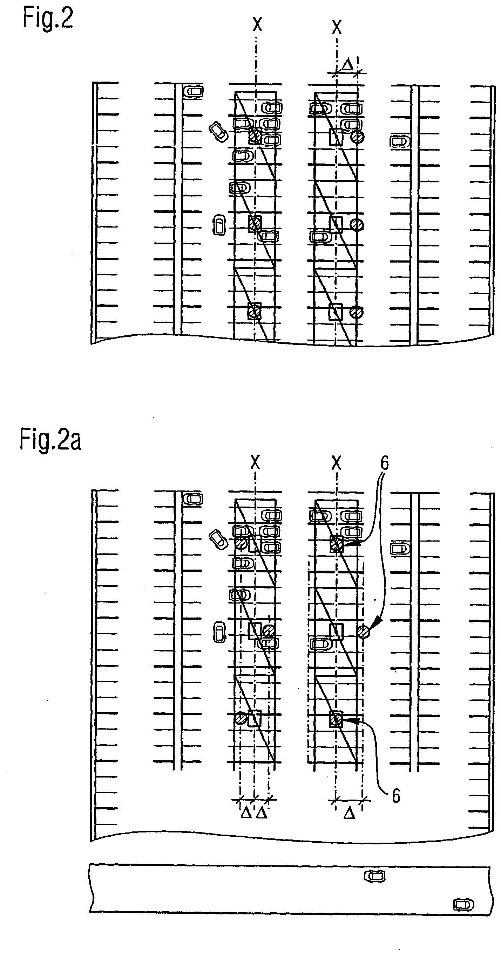

Fig. 2 sowie Fig. 2a zeigen eine Freifläche in Form eines Parkplatzes in der Draufsicht, zusammen mit mehreren Nachführeinrichtungen 1 in schematischer Darstellung. Mit schraffierten Kreisen (nicht maßstäblich dargestellt) sind mögliche Standorte der Sockel 6 von Nachführeinrichtungen 1 dargestellt.

Die betreffende Stütze 6, Säule 6 oder Pylon 6 ist von einer rechteckigen Fläche umgeben, die schematisch die aufgeständerte Solarpaneel-Fläche mit den Ausmaßen B*T zeigt. Es ist sichtbar, dass jede Stütze 6, Säule 6 oder Pylon 6 nicht stets unterhalb des geometrischen Schwerpunkts der aufgeständerten Fläche stehen muss, sondern auch außermittig stehen kann, sofern das vorhandene Platzangebot dies empfiehlt oder vorgibt. Diese Außermittigkeit wird beispielhaft jeweils durch einen Abstand Δ charakterisiert, welcher unterschiedliche Beträge annehmen kann.

Fig. 3 zeigt die Nachführeinrichtung 1 aus Fig. 1 in perspektivischer Ansicht; man erkennt insbesondere die querschnittlich runde Säule 6; welche jedoch in einer weiteren Ausgestaltung der Erfindung auch mit einem recht- oder mehreckigen Querschnitt ausgeführt sein kann. Die dargestellte Nachführeinrichtung 1 trägt eine Matrix mit etwa zehn mal elf, auf der Aufnahmestruktur 12 angebrachten Solarpaneelen (PV-Paneele, PV-Module) 2. Die Aufnahmestruktur 12 ihrerseits ist über eine Tragstruktur 13 mit dem verdrehbaren Teil der Schwenkeinheit 10 verbunden. Die Aufnahmestruktur 12 ist an der Tragstruktur 13 fix befestigt, bspw. mittels vorzugsweise angeschweißter, eckförmiger Befestigungselemente, bspw. Flacheisen oder Winkeln.

Die Hauptachse HA kann direkt durch die Schwenkeinheit 10 gedreht werden.

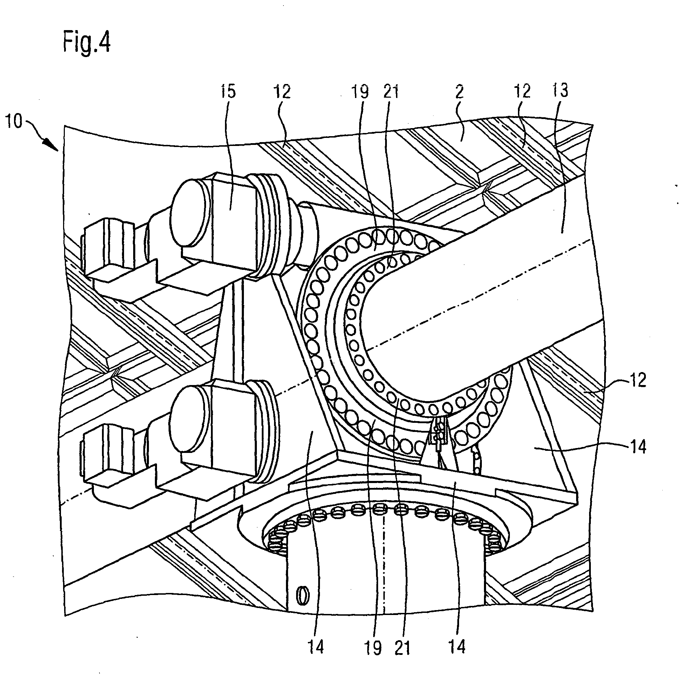

Die Vergrößerung in Fig. 4 zeigt, dass zur verdrehbaren Abstützung der Aufnahmestruktur 12 auf dem Unterbau 6 nur eine einzige Schwenkeinheit 10 notwendig ist, samt wenigstens eines motorischen Antriebs 15. In der Tat ist es in einer weiteren Ausführungsform denkbar, zwei oder mehrere Schwenkeinheiten 10 zu verwenden, welche die zugehörige Tragstruktur 13 entlang der Hauptachse HA zu verstellen geeignet sind.

In Fig. 4 erkennt man die Art und Weise, wie die Schwenkeinheit 10 am Unterbau 6 sowie an der Aufnahmestruktur 12 indirekt befestigt ist. Der unbewegliche Ring 19 der Schwenkeinheit 10 ist über eine Montagevorrichtung 14 an dem Unterbau 6 festgelegt, während der verdrehbare Ring 21 der Schwenkeinheit 10 über die Tragstruktur 13 mit der Aufnahmestruktur 12 verbunden ist. Die beiden, zueinander konzentrischen, ringförmigen Strukturen 19, 21 sind aneinander, insbesondere ineinander, gelagert und zur gegenseitigen Relativverstellung mit mindestens einem Antrieb 15 gekoppelt. Die Koppelung geschieht gehäuseintern. In der Zeichnung sind sogar zwei Antriebe 15 dargestellt, welche gleichzeitig mittels je einer Schnecke mit der Verzahnung an dem verdrehbaren Ring 21 kämmen.

Die Perspektive in Fig. 4 ist aus der Sicht von schräg unten. Im Hintergrund sind die Aufnahmestruktur 12 sowie die auf genanntem System installierten planaren Elemente 2 oder Flächen 2 gut zu erkennen. Es ist hier beispielhaft offenbart, dass die Tragstruktur 13 sich stets entlang der Hauptachse HA orientiert. Die Tragstruktur 13 ist durch die Schwenkeinheit 10 verstellbar. Dasjenige konzentrische Element der Schwenkeinheit 10 mit dem geringeren Durchmesser 19 ist hierbei direkt mit der Tragstruktur 13 verbunden, etwa verschweißt, verschraubt, oder verpresst. Bei der konzentrischen Anordnung ist das Anschlusselement 19 mit dem größeren Durchmesser über eine Wälzlagerung, beispielsweise eine Rollenlagerung oder Kegelrollenlagerung, oder aber zumeist über eine Kugellagerung, gegenüber der ringförmigen Struktur 21 mit dem geringeren Durchmesser verdrehbar 19 gelagert. Beide konzentrischen Ringe 19, 21 sind also stets gegeneinander verdrehbar gelagert. Die Realisierung der Relativverstellung dieser konzentrischen Ringe 19, 21 untereinander erfolgt durch mindestens einen Antrieb 15, hier sogar über zwei Antriebe 15. Diese Antriebselemente 15 treiben beispielsweise über eine im Gehäuse der Schwenkeinheit 10 positionierte Schnecke den verzahnten Ring an. Der Unterbau 6 ist fix mit der Montagevorrichtung 14 verbunden, bspw. über eine Vielzahl von Schrauben.

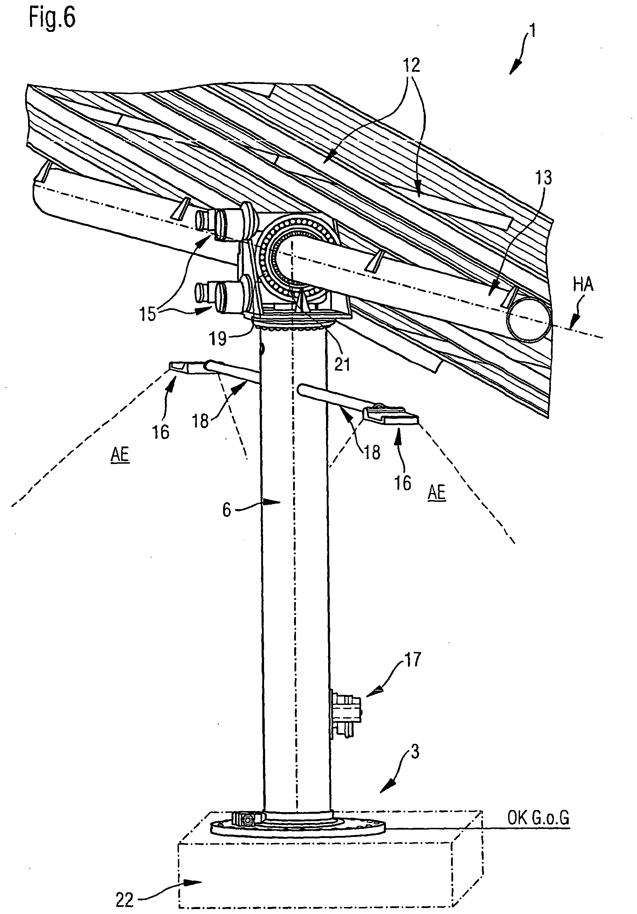

Fig. 6 zeigt die Säule 6, welche mittels eines Gelenks 23 klappbar gestaltet ist, wobei der obere Teil 6' des Unterbaus 6 gegenüber dem unteren Teil 6" des Unterbaus 6 um eine horizontale Achse verschwenk- bzw. klappbar ist. Der untere Teil 6" ist mit dem Boden, dem Fundament, oder einem Gebäudeteil verbunden. Der obere Teil 6' ist mit der Schwenkeinheit 10 direkt oder indirekt verbunden. Nach der Aufstellung des Pylons 6 bzw. der Säule 6, oder Stütze 6 werden die beiden Flügel der klappbaren Einrichtung exzentrisch zu der Schwenkachse 28 an mindestens einer Stelle verschraubt 24, sodass ein Zurückklappen unterbunden ist. Es können dazu bevorzugt auch weitere Sicherungsschrauben 27 verwendet werden. Der Bolzen 28 befindet sich in der Mitte des Gelenkes 23, jedoch neben der eigentlichen Säule 6 und ist das verbindende Element dieser Klappvorrichtung; durch die exzentrische Anordnung wird das Hochklappen des oberen Teils 6' samt dem Gelenkflügel ermöglicht, wenn die Schrauben 24, 27 gelöst sind. Weitere Teile dieser Gelenkverbindung 23 sind die an je einer Seite 6', 6" verbundenen Flügel 25 sowie die mit je einem Flügel 25 verbundenen, den Gelenkbolzen 28 ringförmig umgreifenden Scharnierglieder 26, welche in Längsrichtung des Gelenkbolzens 28 hintereinander bzw. versetzt angeordnet sind.

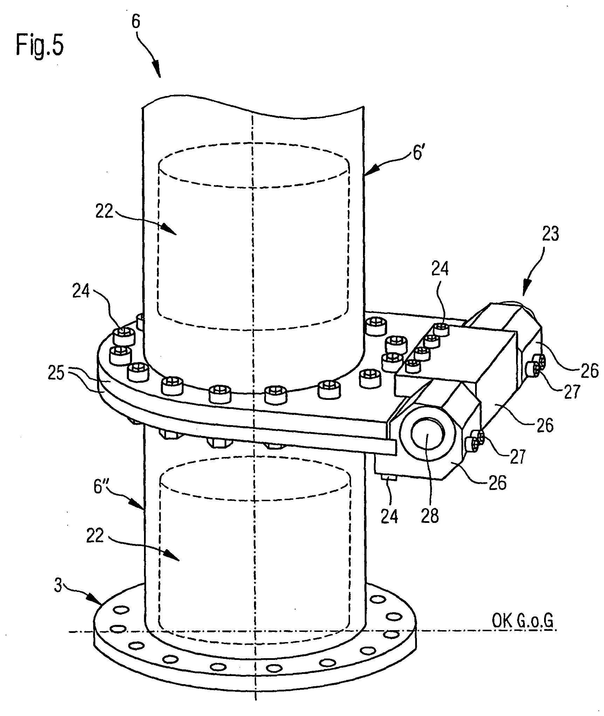

Wie Fig. 5 weiter zeigt, kann der Fußbereich 3 auf dem Gebäude oder auf dem Gelände, insbesondere OK G. o G., fest montiert werden, beispielsweise durch Verschraubung mit dem Boden der dem Fundament oder einer massiven Platte; daran wird die Säule 6 oder der sonstige Unterbau befestigt. Gestrichelt dargestellt sind Kammern 22, welche jeweils separaten Stauraum/Platz zur Aufbewahrung, beispielsweise für Energiequellen oder Energiemodule, bilden, und bspw. bei Aufklappen der Gelenkverbindung 23 zugänglich sind, und/oder über seitliche Türen an der Säule 6,6',6".

Insbesondere beschreibt Fig. 6 beispielhaft, dass die oben genannten Kammern 22 auch unter dem Fußbereich 3 liegen können, beispielsweise im Boden, oder innerhalb eines Gebäudeteils, falls der Unterbau 6 auf einem Gebäudeteil installiert wird. Diese Kammern 22 liegen zwar vorzugsweise im Inneren der Säule (siehe Fig. 5), können in speziellen Ausnahmefällen jedoch auch unterhalb der Bodenplatte der Säule 6 liegen, sofern die Säule dann noch ausreichend vom Fundament getragen wird.

Fig. 6 zeigt eine gegenüber Fig. 3 dahingehend abgewandelte Ausführungsform, dass an der Säule 6 wenigstens eine Befestigungsvorrichtung 18 bspw. für Leuchten od. dgl. angeordnet ist. Diese Befestigungsvorrichtung 18 kann bspw. zwei ausladende Kragarme aufweisen, an welchen beispielsweise Werbetafein oder Beleuchtungseinheiten oder andere Gerätschaften befestigt und in einer Abstandshöhe über dem Grund (OK G. o. G.) gehalten werden können.

An der Befestigungsvorrichtung 18 angebrachte Leuchten 16 ermöglichen eine Ausleuchtung des Bereichs AE unterhalb der Schwenkeinheit 10. Werden diese Leuchtmittel 16 bei Dunkelheit betrieben, so wird dazu die tagsüber mittels der installierten Solarpaneele 2 gesammelte und zwischengespeicherte Sonnenenergie zur Beleuchtung der Fläche unterhalb eingesetzt wird. Der ausgeleuchtete Bereich AE kann einen großen oder kleinen Ausleuchtwinkel annehmen; dies ist abhängig von den eingesetzten Leuchtkörpern 16.

In Fig. 6 ebenso dargestellt ist eine elektrische Kopplungsvorrichtung 17, an welche elektrische Verbraucher angeschlossen werden können, etwa um beispielsweise Elektrofahrzeuge mit Energie zu versorgen. Es kann sich hierbei um eine Art Steckkupplung handeln, ggf. am Ende eines ausziehbaren Kabels, zum Anstecken an einem Elektrofahrzeug. Möglich wäre aber auch, die Energie auf elektromagnetischem bzw. induktivem Weg auf einen Verbraucher, insbesondere ein Elektrofahrzeug, zu übertragen, ähnlich wie bei einem Transponder, welcher durch Induktion einer Spannung innerhalb einer Spule einem elektromagnetischen Feld Strom entzieht, um daraus einen Elektrospeicher in einer mobilen Einheit aufzuladen.

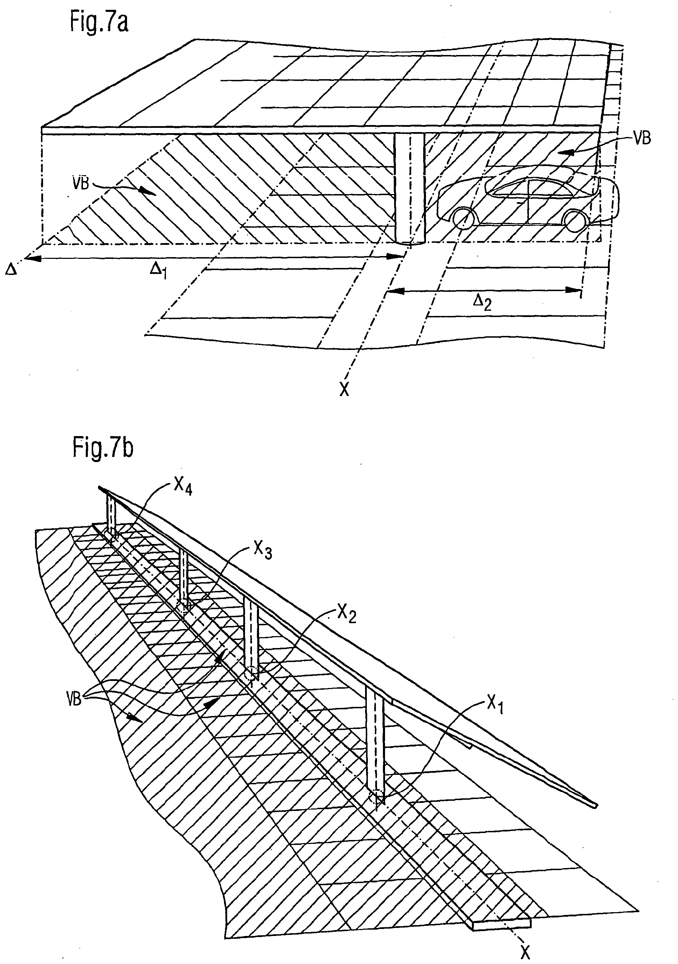

Die Fig. 7a und 7b zeigen beispielhaft den Einsatz mehrerer Nachführeinrichtungen 1 als sogenannter Parkplatz-Solar-Tracker im Sinne der Ausführungsform "massive Struktur" in aneinandergereihter Anordnung. Mehrere dieser Nachführeinrichtungen 1 sind nebeneinander auf einer Freifläche, hier auf einem Parkplatz, aufgestellt. Der Bereich auf Bodenhöhe wird beispielsweise für geparkte Fahrzeuge 20 nutzbar. Bei Dunkelheit ist hier die durch die Aufnahmestruktur 12 aufgeständerte Fläche B*T in der Tischstellung, siehe Fig. 7a. Durch vorgenannte Leuchtanlagen 16 zur Ausleuchtung kann der Parkplatz in der Dunkelheit beleuchtet werden. Dargestellt ist ein Beispiel, bei dem ein Pylon 6 nicht exakt unterhalb der geometrischen Mitte der aufgestellten Fläche positioniert ist, sondern etwas außermittig. Es gilt daher hier: $|\Delta_1| \neq |\Delta_2|$. Alle Unterbau-Einheiten 6 sind in diesem Beispiel am Boden befestigt (bei $X_1$, $X_2$, $X_3$, $X_4$) und befinden sich hierbei auf einer gedachten Linie X. Gemäß Fig. 7b spenden die aufgeständerten Flächen B*T bei Helligkeit Schatten, sodass sich in Bodennähe (OK G. o. G.) dann Verschattungsbereiche VB ergeben.

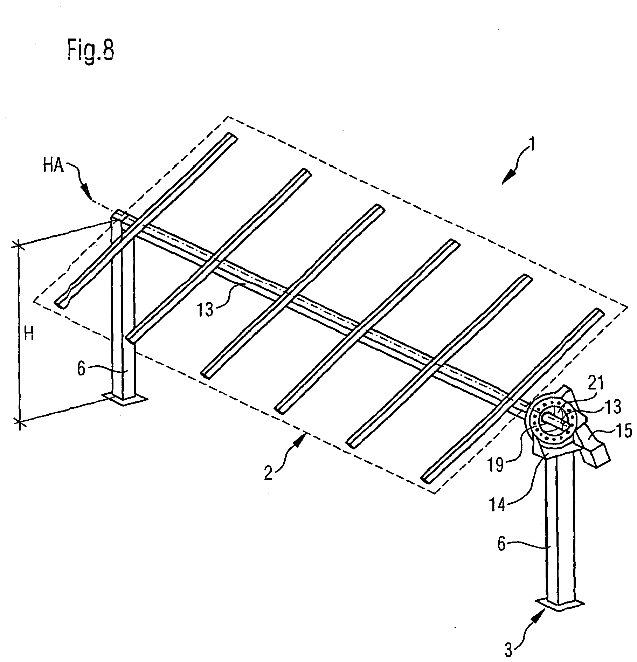

Fig. 8 zeigt beispielhaft und perspektivisch in einer Ansicht schräg von oben eine Nachführeinrichtung 1, wobei die Säule 6 vollständig zum Rand der Solarpaneel-Fläche hin verschoben ist; in diesem Fall ist für eine zuverlässige Abstützung eine zweite Säule 6 vorgesehen, der ersten Säule 6 bezüglich der Mitte der Solarpaneel-Fläche etwa diametral gegenüber liegend, aber auch auf der Hauptachse HA. Dort ist die Tragstruktur 13 ein zweites Mal gelagert, aber vorzugsweise ohne angetriebene Schwenkeinheit 10, sondern nur in einer rein passiven (Wälz-) Lagerung.

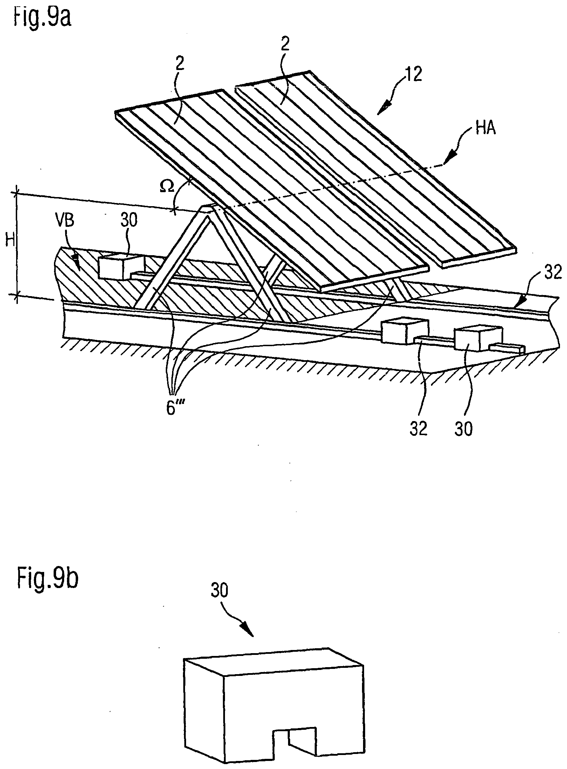

In den Fig. 9a bis 9c dargestellt sind weitere Solar-Aufständerungen, jedoch nach Art der sog. "leichten Struktur". Auch hierbei wird eine Schwenkeinheit 10 verwendet, die zwei zueinander konzentrische, ringförmige Strukturen 19, 21 umfasst, welche gegeneinander verdrehbar gelagert und zur gegenseitigen Relativverstellung mit beispielsweise einem Antrieb 15 gekoppelt sind. Diese Schwenkeinheit 10 sitzt auf einem Unterbau 6, beispielsweise in Form eines Gestells mit mehreren Stützen, die jeweils zwei, von unten nach oben zueinander konvergierenden Streben aufweisen. Durch die Schwenkeinheit 10 kann eine Tragstruktur 13 verdreht werden, die vorzugsweise eine langgestreckte Struktur aufweist, bspw. in Form eines Rohrs oder Profils, welche(s) entlang der Hauptachse HA ausgerichtet ist. Dem Erfindungsgedanken folgend, ist die Hauptachse HA stets in etwa horizontal orientiert, und somit in etwa parallel zu der Fläche, auf welcher der Unterbau 6 insgesamt steht. An der Tragstruktur 13 befestigt ist die Aufnahmestruktur 12, welche darauf fix installierte planare Elemente 2 oder Flächen 2, beispielsweise Solarpaneele oder Werbetafeln, tragen kann.

Im Vergleich zur sog. massiven Struktur ist die Höhe H des Unterbaus 6 bei der leichten Struktur nach Fig. 9a bis 9c, welche die Vorrichtung 10 aufständert, relativ gering. Beispielsweise ist die Höhe H des Unterbaus 6 kleiner als die Größe eines Menschen. In Fig. 9a schematisch angedeutet ist auch der Verschattungsbereich VB, der sich bei ausreichenden Sonnenstrahlverhältnissen unterhalb der aufgeständerten Fläche ergibt.

Die isolierte Darstellung von nur zwei aufgeständerten Elementen 2, sowie die Befestigungsmöglichkeiten der Aufständerung 6''' beziehungsweise deren Fußschienen 32 sind sinngemäß in Fig. 9a und Fig. 9b gezeigt. Dabei ist sowohl der Verschattungsbereich VB zu sehen als auch zwei um den Elevationswinkel $\Omega$ aktuell verstellte planare Flächen 2, beispielhaft ausgeführt als Solarpaneele (PV-Paneele; PV-Module). Dargestellt sind ebenfalls die Fußschienen 32, welche nicht an den berührten Bodenbereich angeschraubt werden müssen, sondern darauf nur locker aufliegen und mittels sogenannter Formsteine 30 oder anderen Beschwerungselementen 30 auf der Oberfläche der Gründung festgehalten werden. Diese Formsteine 30 können bspw. eine brückenartige Gestalt aufweisen, etwa nach Art eines umgestürzten "U", wobei die Höhe ihrer unterseitigen Ausnehmung bspw. der Höhe einer Fußschiene 31 entspricht. Es können mehrere dieser Formsteine 30 oder andere Beschwerungselemente 30 verwendet werden. In der Regel werden mehrere solche Formsteine 30 oder Befestigungselemente 30 verwendet, um genügend Positionsstabilität für die Gesamtanlage zu gewährleisten. Der Unterbau 6''' in diesem Beispiel ist ein Gestell oder Ständerwerk, gegebenenfalls auch als Fachwerk denkbar, aus leichten Profilen oder Rohrstrukturen oder sonstigen, langgestreckten Halbzeugen, ideal zur Realisierung von sehr leichten Gesamtanlagen. Die Höhe H des Unterbaus 6 ist vorzugsweise gleich oder kleiner als die Größe eines Menschen, also vorzugsweise gleich oder kleiner als zwei Meter.

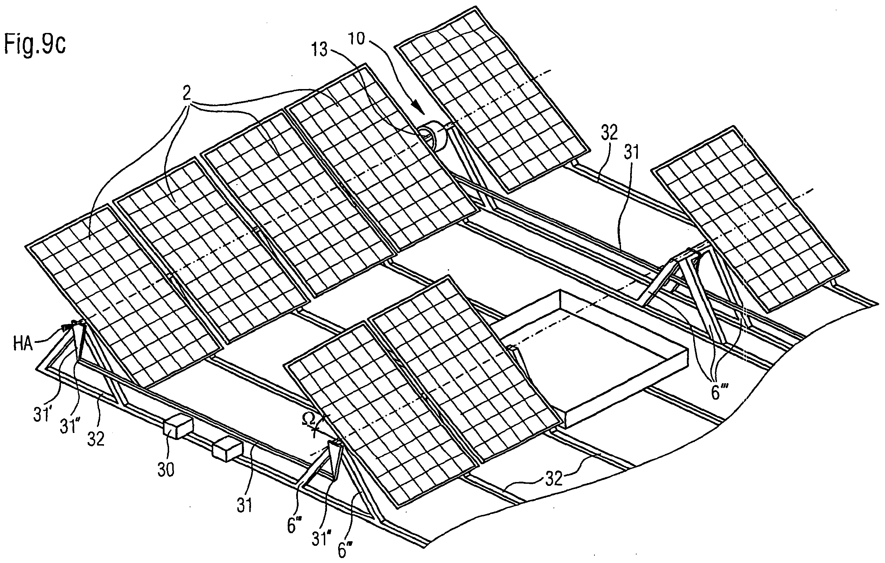

Fig. 9c zeigt als Anwendungsfall der leichten Struktur ein ganzes Solarfeld mit mehreren Solar-Aufständerungen. Inmitten dieses Solarfeldes befindet sich beispielsweise nur eine Schwenkeinheit 10 zu einer Aktivverstellung der planaren Flächen 2 oder Elemente 2 einachsig in Elevation. Die dargestellten planaren Flächen 2 oder Elemente 2, sind hier etwa Solarpaneele (PV-Paneele; PV-Module) und werden durch diese einzige möglichst zentral angeordnete Schwenkeinheit 10 demnach alle gleichsinnig in Elevationsrichtung verstellt. Durch Verdrehung der Tragstruktur 13 um eine Hauptachse HA werden die planaren Flächen 2 oder Elemente 2 verdreht. Wichtig ist in dieser beispielhaften Ausführung, dass alle vorhandenen planaren Flächen 2 oder Elemente 2 stets identisch verstellt werden, sobald die zentral angeordnete Schwenkeinheit 10 eine Verstellung vornimmt. Dies wird dadurch realisiert, dass die jeweiligen planaren Flächen 2 oder Elemente 2 über ein entsprechendes mehrteiliges mechanisches Gestänge 31, 31', 31" miteinander verbunden sind.

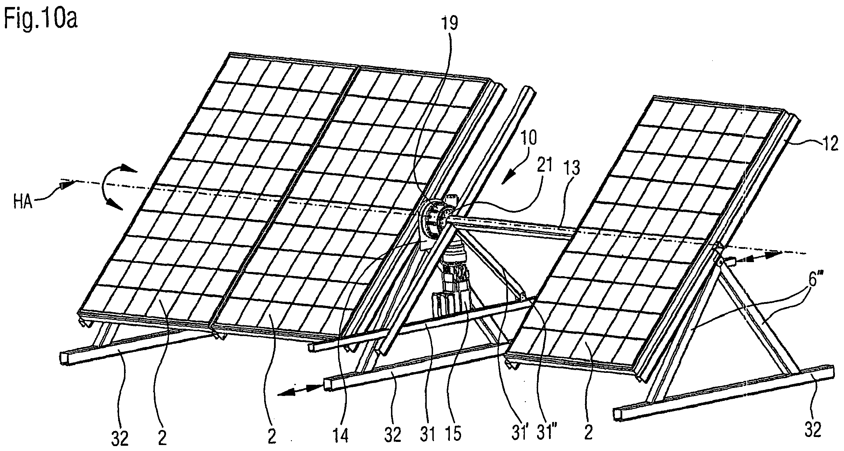

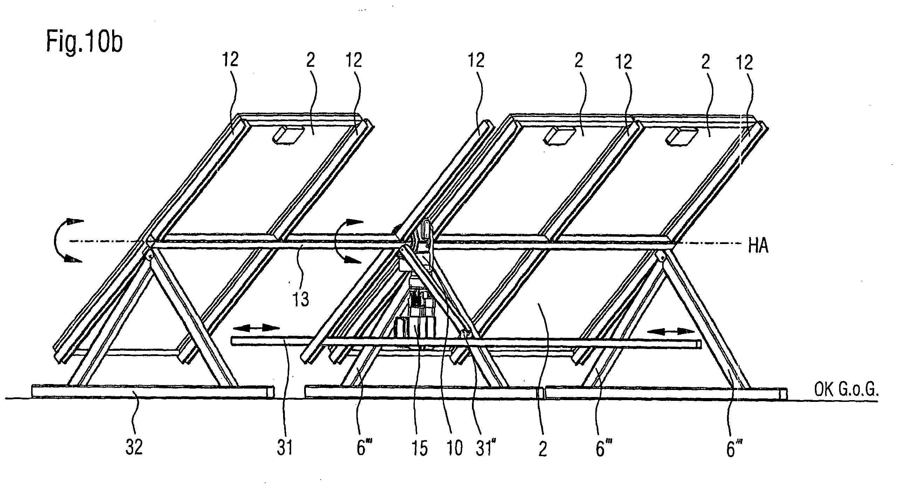

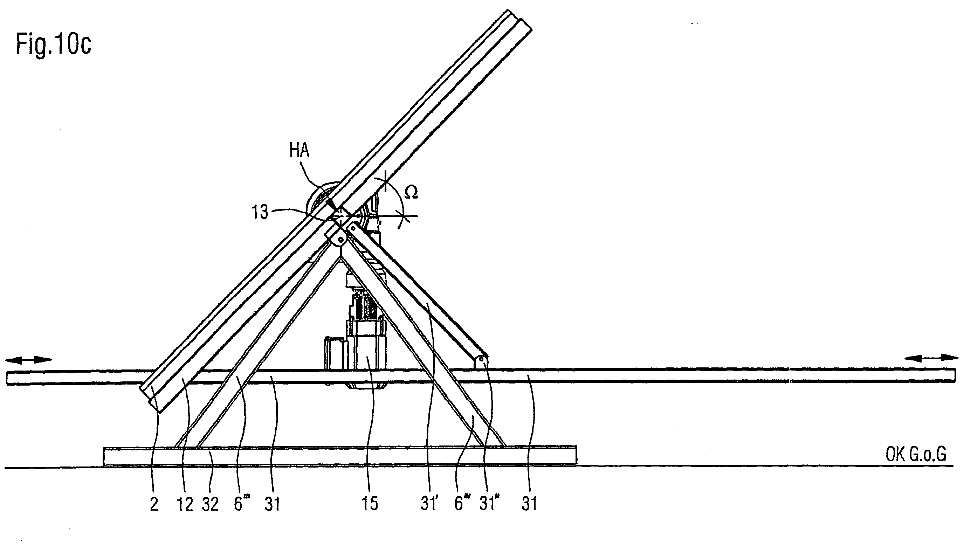

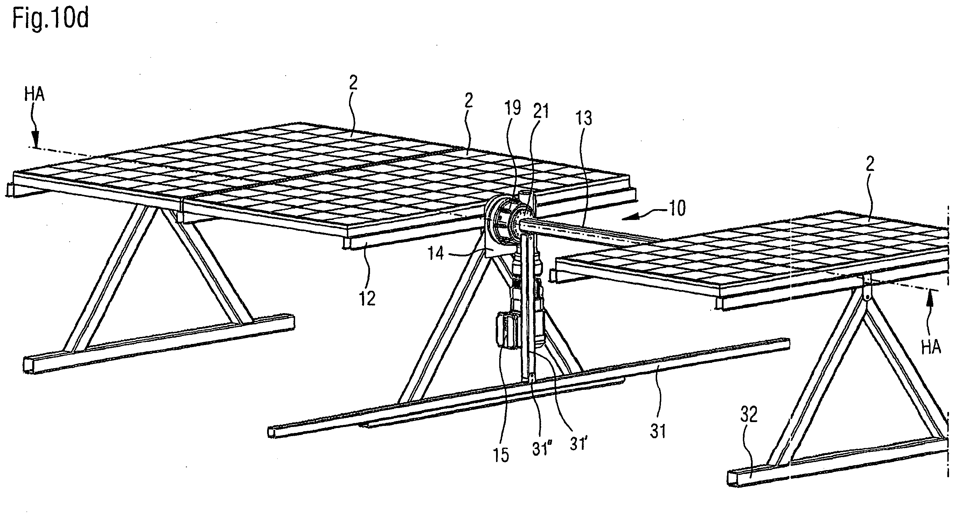

Die Fig. 10a zeigt ebenfalls, dass alle dargestellten, nebeneinander platzierten, planaren Flächen 2 oder Elemente 2 um die gemeinsame, horizontale Hauptachse HA schwenkbar auf einem Unterbau 6 mit mehreren, vorzugsweise zueinander parallelen Fußschienen 32 angeordnet sind.

Den Figuren 10a bis 10f ist ein Solarfeld zu entnehmen, bei welchem mehrere Solarpaneele 2 voreinander und nebeneinander aneinandergereiht sind. Das beispielhafte Solarfeld wird durch eine Schwenkeinheit 10 in Elevation um den Winkel Ω verstellt, wobei die Schwenkeinheit 10 bevorzugt am Unterbau 6 festgelegt ist, bspw. an einer Fußschiene 32. Sichtbar dargestellt ist mindestens eine horizontal orientierte Schubstange 31, welche eine vordere Reihe mit einer dahinter liegenden Reihe von planaren Flächen 2 oder Elemente 2 verbindet. Die Schubstangen 31 sind jeweils über ein Gelenk 31" mit der Aufnahmestruktur 12 gekoppelt. Auf der Aufnahmestruktur 12 ist die planaren Fläche 2 oder das planare Element 2 fix installiert. Durch die Schwenkeinheit 10 verdrehbar ist die Tragstruktur 13, welche stets entlang einer Hauptachse HA orientiert ist. Bei Verstellung der Tragstruktur 13 durch die erfindungsgemäße Vorrichtung 10 wird auch die Aufnahmestruktur 12 gleichsinnig verstellt, da diese Aufnahmestruktur 12 mit der Tragstruktur 13 fix verbunden ist. Dadurch, dass das Gestänge 31' der Schubstange ebenfalls fix mit der Aufnahmestruktur 12 verbunden ist, verstellt sich also auch dieses Gestänge in Elevation und gleichsinnig wie die Verstellung der Tragstruktur 13. Diese Drehbewegung wird sich durch das Gelenk 31", das an der jeweiligen Schubstange 31 befestigt ist, in eine größtenteils translatorische Bewegung der Schubstange 31 in horizontaler Richtung umwandeln. Somit wird die Drehbewegung in Elevation Ω durch eine im Wesentlichen translatorische Bewegung der Schubstange 31 von einer Reihe mehrerer Solarpaneele 2 auf die davor oder dahinterliegende Reihe mehrerer Solarpaneele 2 übertragen. Alle Solarpaneele - oder allgemeiner: alle vorhandenen planaren Flächen 2 oder Elemente 2 - welche auf diese Weise miteinander verbunden sind, sind über den daraus resultierenden Verstellmechanismus direkt oder indirekt mit der Tragstruktur 13 gekoppelt oder verbunden. Bei Verstellung der Tragstruktur 13 infolge einer Betätigung der Schwenkeinheit 10 werden also alle so verbundenen planaren Flächen 2 oder Elemente 2 um den selben Elevationswinkel Ω verstellt.

Dazu ist zwischen miteinander gekoppelten Tragstrukturen 13 ein Gestänge 31' mit einer Schubstange 31 angeordnet. Sobald die angetriebene Tragstruktur 13 von der Schwenkeinheit 10 in Drehung versetzt wird, wird gleichzeitig auch das Gestänge 31' in Bewegung versetzt. Diese Bewegung wird durch Gelenke 31", welche an der jeweiligen Schubstange 31 befestigt sind, in eine größtenteils translatorische Bewegung der Schubstange 31 in horizontaler Richtung umgesetzt und als derartige translatorische Bewegung übertragen. Somit wird die Drehbewegung in Elevation Ω durch eine im Wesentlichen translatorische Bewegung der Schubstange 31 von einer Reihe mehrerer, planarer Flächen 2 oder Elemente 2 auf die davor oder dahinterliegende Reihe ähnlicher Elemente übertragen. Alle vorhandenen planaren Flächen 2 oder Elemente 2, welche auf diese Weise miteinander verbunden sind, sind über den genannten Verstellmechanismus direkt oder indirekt mit der Tragstruktur 13 verbunden. Bei Verstellung der Tragstruktur 13 infolge einer Betätigung der Schwenkeinheit 10 werden also alle so verbundenen planaren Flächen 2 oder Elemente 2 um den selben Elevationswinkel Ω verstellt.

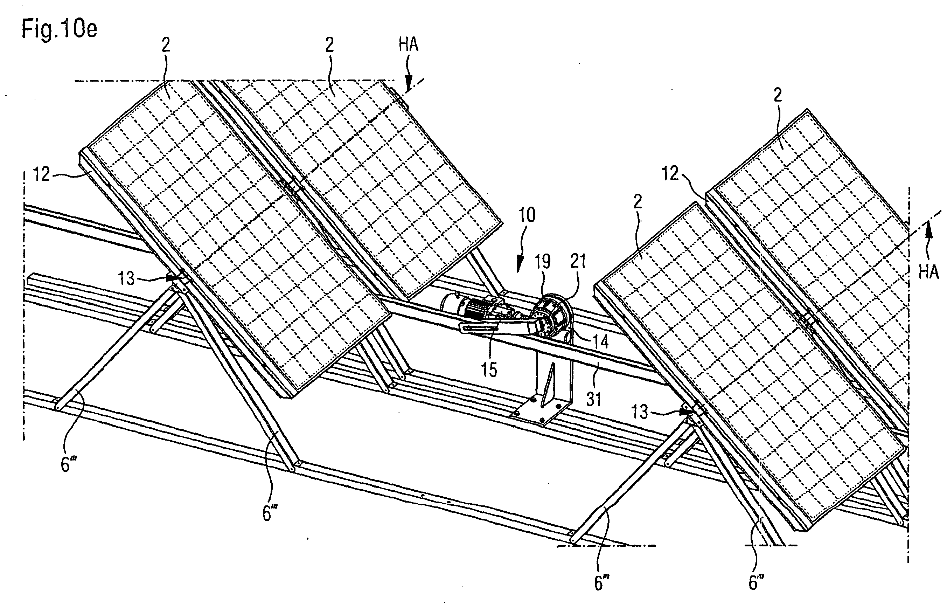

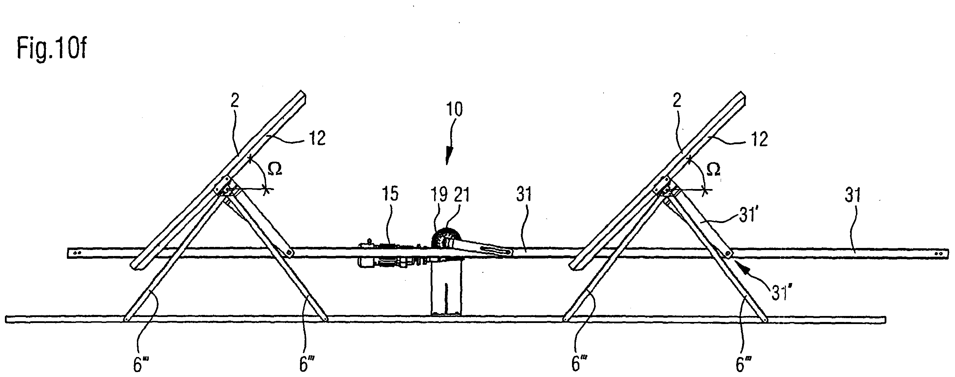

Gemäß Fig. 10e und 10f muss die Schwenkeinheit 10 nicht direkt an einer Tragstruktur 13 befestigt sein, sondern kann auch über ein Gestänge 31 angekoppelt sein.

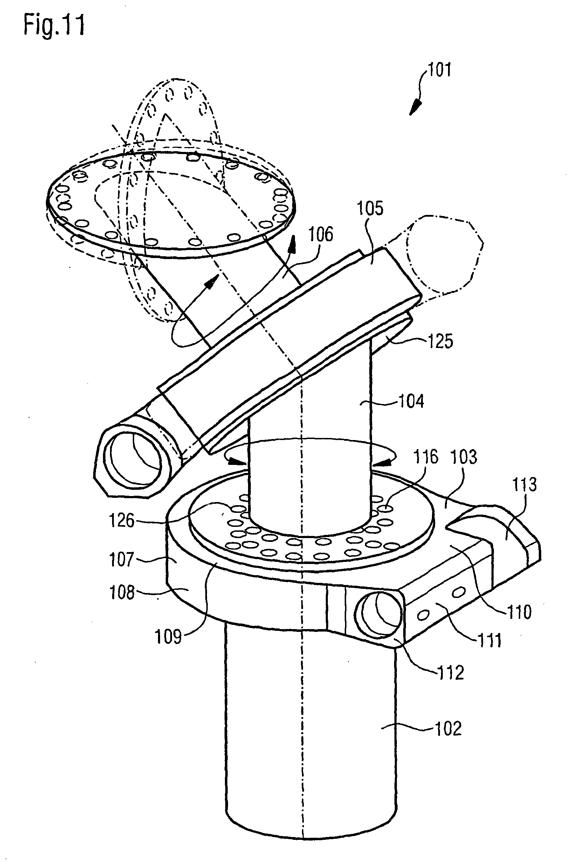

Die Nachführeinrichtung 101 aus Fig. 11 ist als verstellbare Tragkonstruktion für einen ebenen Rahmen zur Montage einer oder vorzugsweise mehrerer Solarmodule gedacht, wobei Rahmen und Solarmodule zur Übersichtlichkeit in der Zeichnung weggelassen sind.

Die Nachführeinrichtung 101 besteht im Wesentlichen aus fünf Baugruppen: Einem Sockel 102, einer unteren Schwenkeinheit 103, die über eine Montagebaugruppe 154 mit einer oberen Schwenkeinheit 105 verbunden ist, und ein den eigentlichen Rahmen abstützende Stützbaugruppe 106.

Die beiden Schwenkeinheiten 103, 105 können baugleich sein, obwohl dies nicht zwingend ist. Da sie im Normalfall zumindest die selbe Struktur bzw. einen entsprechenden Aufbau aufweisen sollten, soll im Folgenden diese bevorzugte Struktur für beide Schwenkeinheiten 103, 105 gemeinsam beschrieben werden:

Beide Schwenkeinheiten 103, 105 umfassen jeweils zwei zueinander konzentrische Ringe aus Metall. Bevorzugt sind die beiden Ringe radial ineinander angeordnet, liegen also etwa in einer gemeinsamen Ebene. Man kann daher von einem inneren Ring und von einem äußeren Ring sprechen. Zwischen beiden Ringen befindet sich ein Spalt, so dass sie gegeneinander um die gemeinsame Achse verdrehbar sind. Damit ihre Relativposition während einer derartigen Verdrehung exakt eingehalten wird, befinden sich in dem Spalt zwischen beiden Ringen ein oder mehrere Reihen von Wälzkörpern, die entlang je einer Laufbahn pro Ring und Wälzkörperreihe abrollen und vorzugsweise derart vorgespannt sind, dass zwischen beiden Ringen kein Spiel besteht. Bei den Wälzkörpern kann es sich um Kugeln, Rollen, Nadeln, Tonnen od. dgl. handeln.

Einer der beiden Ringe ist - bevorzugt an seiner dem Spalt abgewandten Mantelfläche - mit einer rundum laufenden Verzahnung versehen. Diese Verzahnung wird vorzugsweise von einem Gehäuse 107 abgedeckt, welches an dem jeweils anderen Ring festgelegt oder mit diesem verbunden, bspw. integriert, ist. Bevorzugt besteht dieses Gehäuse 107 selbst aus einem zylindermantelförmigen Gehäuseteil 108 und aus einem kreisscheibenförmigen Gehäuseteil 109, welche miteinander verbunden oder gar integral miteinander hergestellt sein können, bspw. gemeinsam aus einem schmelzflüssigen Material gegossen.

Wie man aus Fig. 11 erkennen kann, weist das Gehäuse 107 eine radiale Erweiterung 110 auf, die durch einen zu dem zylindermantelförmigen Teil 108 des Gehäuses 107 etwa tangentialen Oberflächenbereich 111 begrenzt wird sowie durch zwei denselben mit dem zylindermantelförmigen Teil 108 des Gehäuses verbindende Stirnseiten 112. In dieser Gehäuseerweiterung 110 ist eine Schnecke gelagert, deren Längsachse etwa tangential zu dem äußeren Ring verläuft. Diese Schnecke ist in Fig. 11 nicht dargestellt; sofern sie eingesetzt ist, kämmt sie jedoch mit einer rundum laufenden Verzahnung am Außenumfang des äußeren Rings und ist daher in der Lage, eine definierte Relativverdrehung zwischen diesem Ring und dem Gehäuse 107 zu bewirken, wenn sie von einem Motor angetrieben wird. Zum Anbau eines Motors kann an einer ggf. mit Überständen 113 versehenen Stirnseite 112 der Gehäuseerweiterung 110 ein Antriebsmotor angeflanscht werden, derart, dass dessen Abtriebswelle - bspw. über eine in Nuten einlegbare Feder - drehfest mit der Schnecke gekoppelt wird. An der gegenüber liegenden Stirnseite 112 der Gehäuseerweiterung 110 könnte bspw. eine Bremseinrichtung angeflanscht oder anderweitig festgelegt werden.

Deren Zuleitungen wie auch die Zuleitungen zu dem Antriebsmotor können bspw. in einem Schaltkasten zusammengefasst werden, der ggf. an dem Oberflächenbereich 111 der Gehäuseerweiterung 110 festgeschraubt werden könnte.

Jeder der beiden Ringe einer Schwenkeinheit 103, 105 - oder ein Ring derselben einerseits und das demgegenüber verdrehbare Gehäuse 107 andererseits - weist jeweils eine ebene Anschlußfläche 114, 115 auf zur Verbindung mit dem Sockel 102 einerseits und der Montagebaugruppe 104 andererseits, oder zur Verbindung mit dieser Montagebaugruppe 104 einerseits und der Stützbaugruppe 106 andererseits.

Diese beiden Anschlußflächen 114, 115 einer Schwenkeinheit 103, 105 liegen einander gegenüber, d.h., eine liegt an deren Oberseite und eine an deren Unterseite. Sofern eine Anschlußfläche 114 an einem Gehäuse 107 ausgebildet ist, befindet diese sich bevorzugt an der Oberseite, damit der zylindermantelförmige Gehäuseteil 108 die betreffende Schwenkeinheit 103, 105 nach Art einer herab hängenden Schürze umgibt und dadurch den Spalt zwischen dem Gehäuse 107 und dem diesem gegenüber verdrehbaren Ring den Witterungseinflüssen wie bspw. Regen oder Schnee weitestgehendst entzieht.

In beiden Anschlußflächen 114, 115 sind jeweils mehrere Befestigungsbohrungen 116 vorgesehen, insbesondere kranzförmig über den Umfang verteilt. Es handelt sich hierbei vorzugsweise um mit einem Innengewinde versehene Sacklochbohrungen zum Eindrehen von Maschinenschrauben.

Mit jeder Anschlußfläche 114, 115 jeder Schwenkeinheit 103, 105 wird jeweils eine Baugruppe verbunden, also entweder der Sockel 102, die Montagebaugruppe 104 oder die Stützbaugruppe 106.

Diese drei Baugruppen 102, 104, 106 haben jeweils eine vergleichbare Struktur: Jede besteht aus einem Mittelteil 117, 118, 119 aus einem Profil mit einem konstanten Querschnitt, welches an seinen beiden Enden Befestigungsmittel aufweist zum Anschluß an ein nicht dargestelltes Fundament oder an eine Schwenkeinheit 103, 105 oder an den ebenen Rahmen, woran die eigentlichen Solarmodule festgelegt werden.

Lediglich an dem Sockel 102 könnte ein unterseitiges Befestigungsmittel entfallen, wenn dieser bspw. in seiner Gesamtheit in ein Fundament einbetoniert wird. Im Übrigen weist der Sockel 102 eine oberseitige Anschlußplatte 120 auf zum Anschluß an die untere Anschlußfläche 115 der unteren Schwenkeinheit 103.

Die Montagebaugruppe 104 weist eine untere Anschlußplatte 121 auf zum Anschluß an die obere Anschlußfläche 114 der unteren Schwenkeinheit 103, sowie eine obere Anschlußplatte 122 zum Anschluß an die untere Anschlußfläche 115 der oberen Schwenkeinheit 105.

Die Stützbaugruppe 106 weist eine untere Anschlußplatte 123 auf zum Anschluß an die obere Anschlußfläche 114 der oberen Schwenkeinheit 103, sowie eine obere Anschlußplatte 124 zum Anschluß an die Unterseite des die eigentlichen Solarmodule tragenden Rahmens.

Die Anschlußplatten 120-124 sind vorzugsweise mit den Stirnseiten der Mittelteile 117-119 verschweißt, insbesondere stumpf verschweißt.

Zu diesem Zweck münden die zylindermantelförmigen, insbesondere kreiszylindermantelförmigen Mittelteile 117-119 an ihren beiden Enden jeweils in einer ebenen Stirnfläche. Daran ist dann je eine Anschlußplatte 120-124 angeschweißt, ggf. mit Ausnahme des unteren Endes des Sockels 102.

Die Anschlußplatten 120-124 haben jeweils einen kreisförmigen Umfang, dessen Radius jeweils größer ist als der Radius des angrenzenden Mittelteils 117-119, so dass die Anschlußplatten 120-124 über die Mittelteile 117-119 nach Art eines rundum laufenden Flansches überstehen. In diesen flanschartig überstehenden Bereichen 125 sind jeweils mehrere, vorzugsweise kranzförmig verteilt angeordnete Befestigungsbohrungen 126 zu finden, welche jeweils paarweise mit einer Befestigungsbohrung 116 in einer Schwenkeinheit 113, 115 fluchten und das Verbinden der Schwenkeinheiten 103, 105 mit den Baugruppen 102, 104, 106 mittels Schrauben erlauben.

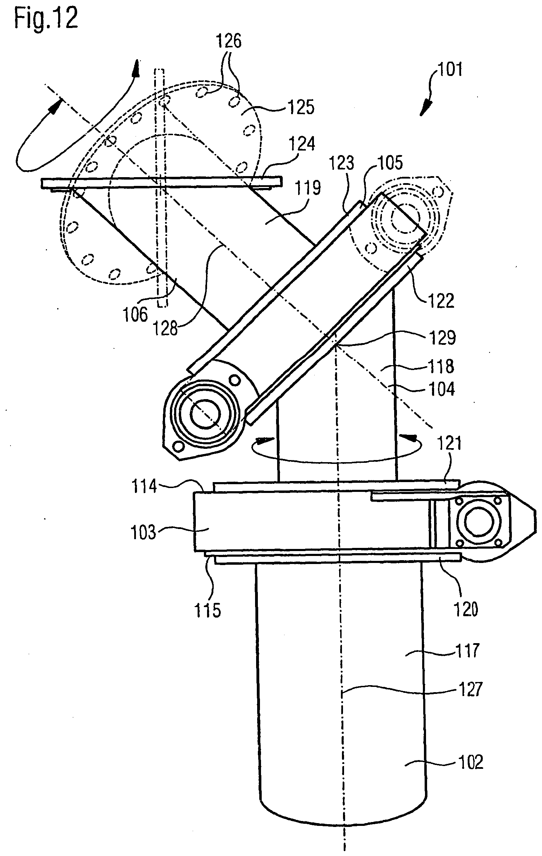

Wie man den Fig. 11 und 12 weiter entnehmen kann, sind die beiden Stirnflächen des Sockels 102 parallel zueinander. Deswegen liegt die Hauptebene der von dem Sockel 102 unmittelbar getragenen unteren Schwenkeinheit 103 in einer horizontalen Ebene. Die Schwenkachse 127 der unteren Schwenkeinheit 103 verläuft also vertikal. Die obere Anschlußfläche 114 der unteren Schwenkeinheit 103 sowie die daran festgelegte Anschlußplatte 121 der Montagebaugruppe 104 und deren Mittelteil 118 verändern daher bei einem Verschwenken um die Achse 127 ihre Lage im Raum nicht.

Wie die Fig. 11 und 12 weiter zeigen, ist die obere Stirnfläche der Montagebaugruppe 104 und die daran befestigte, bspw. angeschweißte obere Anschlußplatte 122 nicht parallel zu der unteren Anschlußplatte 121 der Montagebaugruppe 104; sie liegt daher nicht in einer horizontalen Ebene, sondern ist um einen Winkel $\beta$ gegenüber der Horizontalen geneigt. Im vorliegend dargestellten Beispiel ist $\beta$ = 45°. Dies hat zur Folge, dass die obere Anschlußplatte 122 der Montagebaugruppe 104 bei einem Verschwenken um die Achse 127 eine Art Taumelbewegung ausführt, wobei sich ein dieselbe lotrecht durchsetzender Strahl entlang einer Kegelfläche bewegt.

Dies wiederum hat zur Folge, dass bei einer Schwenkbewegung um die Schwenkachse 127 die obere Schwenkeinheit 105 ebenfalls eine derartige Taumelbewegung ausführt, wobei sich die jene lotrecht durchsetzende obere Schwenkachse 128 entlang einer Kegelfläche bewegt. Im vorliegend dargestellten Beispiel hat dieser Kegel einen Öffnungswinkel von 2 x 45° = 90°.

Die Fig. 11 und 12 lassen weiter erkennen, dass die Stützbaugruppe 106 im Wesentlichen baugleich mit der Montagebaugruppe 104 ist: Die Mittelteile 118, 119 haben etwa gleiche Geometrie, und insbesondere ist jeweils eine Stirnfläche - und damit auch die daran festgelegte Anschlußplatte 121, 123 - lotrecht von der Längsachse des Mittelteils 118, 119 durchsetzt, während die jeweils anderen beiden Stirnflächen - und damit auch die daran festgelegten Anschlußplatten 122, 124 - mit der Längsachse des betreffenden Mittelteils 118, 119 jeweils gleiche Winkel $\beta$ einschließen, im vorliegenden Fall $\beta$ = 45°.

Wie man der Fig. 12 besonders deutlich entnehmen kann, schließt die obere Schwenkachse 128 mit der unteren Schwenkachse 127 in dem gemeinsamen Schnittpunkt 129 einen Zwischenwinkel $\alpha$ = 135° ein, mit der nach oben verlängerten Schwenkachse 127 den dazu komplementären Winkel $\beta$ = 45°. Je nach Drehstellung der Stützbaugruppe 106 um die obere Schwenkachse 128 subtrahiert sich in einer Extremposition deren Neigungswinkel $\beta$ = 45° von dem Neigungswinkel $\beta$ = 45° der Montagebaugruppe 104 zu einem Winkel $\gamma = \alpha - \beta = 0°$ (in durchgezogenen Linien dargestellte Lage der Stützbaugruppe 106, wobei die oberste Anschlußplatte 124 horizontal ausgerichtet ist), oder in der anderen Extremposition addieren sich diese beiden Neigungswinkel $\beta$ = 45° zu einem Winkel $\gamma = \alpha + \beta = 90°$ (strichpunktiert dargestellte Lage der Stützbaugruppe 6, wobei die oberste Anschlußplatte 124 vertikal ausgerichtet ist).

In der strichpunktierten Position kann die vertikal ausgerichtete Anschlußplatte 124 durch Verschwenken um die untere Schwenkachse 127 in jede der vier Himmelsrichtungen gedreht werden.

Die beiden Extrempositionen unterscheiden sich dadurch, dass die obere Schwenkeinheit 105 um 180° um ihre Schwenkachse 128 verdreht wurde, was insbesondere auch durch die unterschiedlichen Lagen der Gehäuseerweiterung 110 zu erkennen ist. Bei einer Verdrehung der oberen Schwenkeinheit 105 um 90° erreicht diese dagegen die gestrichelt wiedergegebene Position. Durch Einstellen von verschiedenen Zwischenwinkeln an der oberen Schwenkachse 128 kann die Neigung der obersten Anschlußplatte 124 stufenlos zwischen horizontal und vertikal verstellt und sodann in der jeweiligen Position durch Einstellen von verschiedenen Zwischenwinkeln an der unteren Schwenkachse 127 in jede beliebige Himmelsrichtung gedreht werden. Damit ist es ohne weiteres möglich, einen mit Solarmodulen belegten Rahmen mittels der obersten Stützplatte 124 auf jeden Punkt des Himmels auszurichten, von jedem Punkt des rundum laufenden Horizonts ($\gamma$ = 90°) bis zum Zenit ($\gamma$ = 0°).

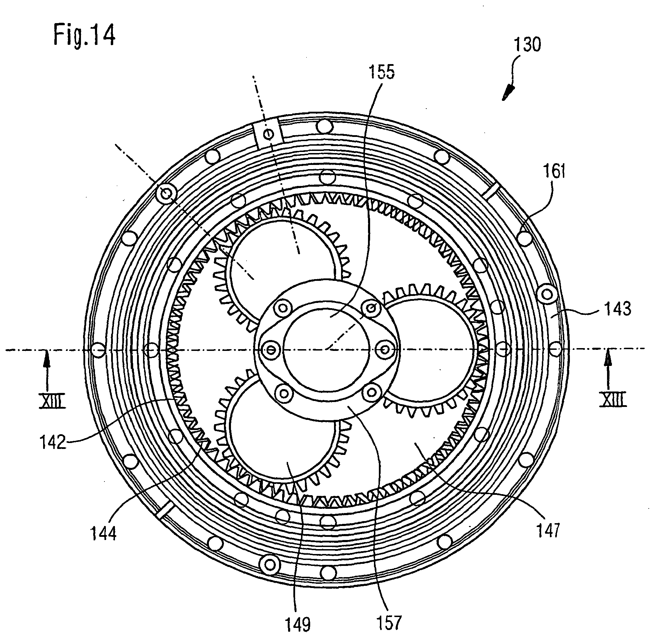

In den Fig. 13 und 14 ist eine gemäß der Erfindung Schwenkeinheit 130 wiedergegeben, die anstatt einer oder beider der oben beschriebenen Schwenkeinheiten 103, 105 Verwendung finden kann, jeweils in Verbindung mit den Baugruppen 102, 104, 106.

Man erkennt auch hier wieder zwei ringförmige, gegeneinander verdrehbare Anschlußelemente 131, 132 mit je einer ebenen Anschlußfläche 133, 134 zum Anschluß an eine Anschlußplatte 120-123 einer Baugruppe 102, 104, 106.

Die beiden Anschlußelemente 131, 132 bestehen im Wesentlichen jeweils aus einem Ring 135, 136 und aus je einem Gehäuseteil 145, 146.

Die beiden Ringe 135, 136 sind konzentrisch zueinander, sowie radial ineinander angeordnet, liegen also etwa in einer gemeinsamen Ebene. Man kann daher von einem inneren Ring 135 und von einem äußeren Ring 136 sprechen. Zwischen beiden Ringen 135, 136 befindet sich ein Spalt 137, so dass sie gegeneinander um die gemeinsame Achse 138 verdrehbar sind. Damit ihre Relativposition während einer derartigen Verdrehung exakt eingehalten wird, befindet sich in dem Spalt 137 zwischen beiden Ringen 135, 136 wenigstens eine Reihe von Wälzkörpern 139, die entlang je einer Laufbahn 140, 141 pro Ring 135, 136 und Wälzkörperreihe abrollen. Bei den Wälzkörpern 139 kann es sich um Kugeln, Rollen, Nadeln, Tonnen od. dgl. handeln.

Der radial innen liegende Ring 135 ist an seiner dem Spalt 137 abgewandten inneren Mantelfläche mit einer rundum laufenden Verzahnung 142 versehen, ähnlich wie ein Hohlrad eines Planetengetriebes.

An der in Fig. 13 oberen Stirnseite des äußeren Rings 136 liegt ein zusätzlicher Ring 143 flächig an bzw. auf; dieser Ring 143 könnte auch direkt mit dem äußeren Ring 136 verbunden oder gar integral mit demselben hergestellt sein, bspw. durch Erstarren aus einer Schmelze in einer gemeinsamen Form oder durch Schmieden aus einem gemeinsamen Grundkörper. Dieser zusätzliche Ring 143 erstreckt sich radial nach innen bis zu der radial innen liegenden Mantelfläche des inneren Rings 135 und ist an seiner dortigen Innenseite ebenfalls mit einer rundum laufenden Verzahnung 144 versehen, ähnlich wie ein Hohlrad eines Planetengetriebes, allerdings unterscheiden sich die beiden Verzahnungen 142, 144 geringfügig in ihrer Zähnezahl $Z_1$, $Z_2$, bspw. $Z_2 = Z_1 \pm k$, k = 1, 2, 3, etc., jedoch k $\ll Z_1$, $Z_2$.

An der Oberseite des zusätzlichen, verzahnten Rings 143 schließt sich ein oberes, kreisringscheibenförmiges Gehäuseteil 145 an; in gleicher Form schließt sich an die gegenüberliegende Stirnseite bzw. an die Unterseite des verzahnten Innenrings 135 unteres, kreisringscheibenförmiges Gehäuseteil 146 an. Die beiden Gehäuseteile 145, 146 sind etwa deckungsgleich und erstrecken sich in radialer Hinsicht von dem Außenumfang des äußeren Rings 136 nach innen bis weit innerhalb bzw. jenseits der Verzahnungen 142, 144. An ihren einander zugewandten Innenseiten kann je eine Art Gleitschichtbelag 47 angeordnet sein. Dieser dient dazu, die Stirnflächen 148 mehrerer fliegend gelagerter, verzahnter Planetenräder 149 planparallel zu führen, so dass die Längsachsen dieser Planetenräder 149 stets parallel zu der Drehachse 138 der Schwenkeinheit 130 ausgerichtet sind.

Diese mehreren - im vorliegenden Fall drei - Planetenräder 149 werden auf ihrer radialen Bahn gehalten durch ein Sonnenrad 150, welches sich konzentrisch zu der Drehachse 138 im Inneren des von den Gehäuseplatten 145, 146 abgegrenzten, etwa zylindrischen Hohlraums angeordnet ist. dieses Sonnenrad kann bspw. mittels Lagern, insbesondere Kugellagern 151, an den Gehäuseplatten 145, 146 bzw. in deren Zentrum daran befestigter Muffen 152, 153 geführt sein.

Die Abtriebswelle 154 eines Antriebsmotors 155 ist in einer Ausnehmung 156 des Sonnenrades 150 drehfest aufgenommen; das Gehäuse des Antriebsmotors 155 ist bevorzugt mittels eines rundum laufenden Flansches 157 an einer Gehäuseplatte 145, 146 oder an einer daran befestigten Muffe 152, 153 festgelegt, bzw. angeflanscht, insbesondere mittels Maschinenschrauben.

Zum Anschluß des unteren Anschlußelements 131 an einer Anschlußplatte 120-123 einer Baugruppe 102, 104, 106 und/oder zur Verbindung des inneren Rings 135 mit der unteren Gehäuseplatte 146 dienen miteinander fluchtende Bohrungen 158, 159, wovon die Bohrungen 158 des inneren Rings 135 als mit Innengewinde versehene Sacklochbohrungen ausgebildet sind, während die Bohrungen 159 in der Gehäuseplatte 146 als Durchgangsbohrungen ausgebildet sind.

Zum Anschluß des oberen Anschlußelements 132 an einer Anschlußplatte 120-123 einer Baugruppe 102, 104, 106 und/oder zur Verbindung des äußeren Rings 136 mit dem zusätzlichen Ring 143 und der oberen Gehäuseplatte 145 dienen miteinander fluchtende Bohrungen 160, 161, 162, wovon die Bohrungen 160 des äußeren Rings 136 als mit Innengewinde versehene Sacklochbohrungen ausgebildet sind, während die Bohrungen 161, 162 in dem zusätzlichen Ring 143 und in der Gehäuseplatte 145 als Durchgangsbohrungen ausgebildet sind.

Die Funktionsweise dieser Anordnung ist wie folgt:

Wenn das Sonnenrad 150, von dem Antriebsmotor 155 angetrieben, rotiert, sind die Planetenräder 149 gezwungen, zwischen diesem und der Verzahnung 144 des zusätzlichen Rings 143 abzurollen, weil dieser zusätzliche Ring 143 über die obere Gehäuseplatte 145 mit dem Gehäuse des Antriebsmotors 155 drehfest gekoppelt ist - das Sonnenrad rotiert also gegenüber der Verzahnung 144 mit derselben Drehzahl wie die Abtriebswelle 154 des Antriebsmotors 155.

Betrachtet man ein mit dem Mittelpunkt eines umlaufenden Planetenrades 149 synchron mit rotierendes Koordinatensystem, so gilt: $n_{Sonnenrad} : n_{Hohlrad,1} = i_{12} = Z_1 : S$, mit $i_{12}$ = Standardübersetzung, S = Zähnezahl des Sonnenrades und $Z_1$ = Zähnezahl der Verzahnung 144 an dem zusätzlichen Ring 143.

Da die Zähnezahl $Z_2$ der Verzahnung 142 des inneren Rings 135 geringfügig von der Zähnezahl $Z_1$ der Verzahnung 144 des zusätzlichen Rings 142 abweicht: $Z_1 \neq Z_2$, gilt in dem betrachteten Koordinatensystem:

$$n_{Hohlrad,1} = n_{Sonnenrad} * S / Z_1;$$

$$n_{Hohlrad,2} = n_{Sonnenrad} * S / Z_2 = n_{Hohlrad,1} * Z_1 / Z_2,$$

also:

$$n_{Hohlrad,1} / n_{Hohlrad,2} = Z_2 / Z_1 = (Z_1 + k) / Z_1 = 1 + k / Z_1.$$

Da $k / Z_1 \ll 1$, sind die beiden Drehzahlen fast gleich. Betrachtet man nun ein an einem Gehäuseteil 145, 146 festgelegtes Koordinatensystem, so folgt daraus, dass die Drehzahl des anderen Gehäuseteils 146, 145 nur unwesentlich ungleich Null ist - es ergibt sich eine große Drehzahluntersetzung und demzufolge eine hohe Drehmomentübersetzung; ein relativ leistungsschwacher Motor genügt also, um ein großes und schweres Anlagenteil auf diesem Weg zu verstellen.

Außerdem kann der Motor 155 innerhalb eines rohrförmigen Mittelteils 117-119 angeordnet und also äußeren Einflüssen wirkungsvoll entzogen werden.

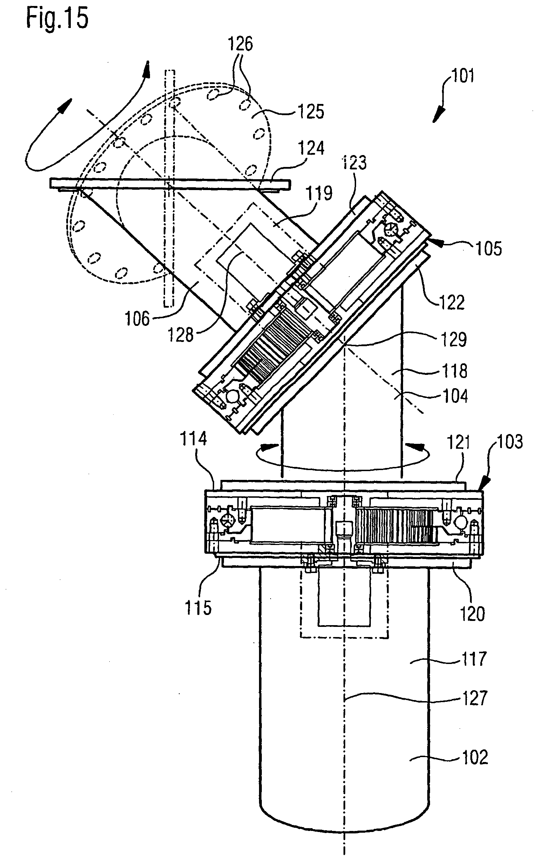

Die Fig. 15 zeigt eine erfindungsgemäße Nachführeinrichtung 101 bei der Verwendung als verstellbare Tragkonstruktion für einen ebenen Rahmen zur Montage einer oder vorzugsweise mehrerer Solarmodule, wobei Rahmen und Solarmodule zur Übersichtlichkeit in der Zeichnung weggelassen sind. Man erkennt insbesondere die in die beiden Schwenkeinheiten 103, 105 integrierten Wolfromgetriebe sowie die jene antreibenden Motoren 155. Dabei ist zu sehen, dass die Antriebsmotoren 155 bevorzugt innerhalb des Sockels 102 einerseits sowie innerhalb der Stützbaugruppe 106 andererseits aufgenommen sind, und zwar jeweils konzentrisch zu den betreffenden Schwenkachsen 127, 128. Während sich dadurch das Gehäuse des unteren Motors 155 überhaupt nicht bewegt und also die elektrische Kontaktierung auf einfachstem Weg vorgenommen werden kann, verschwenkt das Gehäuse des oberen Motors 155 zusammen der oberen Schwenkachse 128. Dies ist aber bei der Anwendung im Rahmen einer Solaranlage keinesfalls problematisch, weil derartige Konstruktionen niemals mehr als eine ganze Umdrehung ausführen, denn in der Nacht werden derartige Solaranlagen wieder in ihre morgendliche Ausgangsposition zurückgefahren. Daher ist selbst eine fliegende Verkabelung des oberen Motors 155 möglich.

Weitere Modifikationen der Erfindung sind möglich; so kann ein Schwenktrieb einer an und füs sich zweiachsigen Nachführung gesperrt bzw. blockiert werden, um daraus eine einachsige Nachführung zu generieren, die naturgemäß weniger Steuerenergie benötigt. Daher könnte beispielsweise an trüben Tagen die Elevationssteuerung auf einen mittleren, optimierten Wert eingestellt und dann abgeschalten werden, um Energie zu sparen. Ferner könnten zwei Schwenktriebe zusammen in einem gemeinsamen Gehäuse angeordnet werden, oder eine an dem oberen Schwenktrieb oder gar an der Tragstruktur 12 angeordnete Schürze, beispielsweise in der Form einer kalottenförmigen Halbschale, könnte beide Schwenktriebe gemeinsam vor Regen oder sonstigen Witterungseinflüssen schützen.

Bezugszeichenliste

| | | | |
|---|---|---|---|
| 1 | Nachführeinrichtung | 30 | Befestigungselement |
| 2 | Solarkoliektor | 31 | Schubstange |
| 3 | Fußelement | 31' | Gestänge |
| 6 | Unterbau | 31" | Gelenk |
| 6' | Teil | 32 | Fußschiene |
| 6" | Teil | 101 | Vorrichtung |
| 6''' | Unterbau | 102 | Sockel |
| 10 | Schwenkeinheit | 103 | untere Schwenkeinheit |
| 12 | Aufnahmestruktur | 104 | Montagebaugruppe |
| 13 | Tragstruktur | 105 | obere Schwenkeinheit |
| 14 | Montagevorrichtung | 106 | Stützbaugruppe |
| 15 | Antrieb | 107 | Gehäuse |
| 16 | Beleuchtungseinrichtung | 108 | zylindermantelförmiges Teil |
| 17 | Kopplungsvorrichtung | 109 | kreisscheibenförmiges Teil |
| 18 | Befestigungseinrichtung | 110 | Gehäuseerweiterung |
| 19 | Erstes Anschlusselement | 111 | Oberflächenbereich |
| 20 | Fahrzeug | 112 | Stirnseite |
| 21 | Zweites Anschlusselement | 113 | Überstand |
| 22 | Kammer | 114 | Anschlußfläche |
| 23 | Gelenk | 115 | Anschlußfläche |
| 24 | Schraubverbindung | 116 | Befestigungsbohrung |
| 25 | Flansch | 117 | Mittelteil |
| 26 | Scharnierglied | 118 | Mittelteil |
| 27 | Sicherungsschraube | 119 | Mittelteil |
| 28 | Bolzen | 120 | Anschlußplatte |

(fortgesetzt)

| | | | |
|---|---|---|---|
| 121 | Anschlußplatte | 147 | Gleitschichtbelag |
| 122 | Anschlußplatte | 148 | Stirnfläche |
| 123 | Anschlußplatte | 149 | Planetenrad |
| 124 | Anschlußplatte | 150 | Sonnenrad |
| 125 | Befestigungsflansch | 151 | Kugellager |
| 126 | Befestigungsbohrung | 152 | Muffe |
| 127 | Schwenkachse | 153 | Muffe |
| 128 | Schwenkachse | 154 | Abtriebswelle |
| 129 | Schnittpunkt | 155 | Antriebsmotor |
| 130 | Schwenkeinheit | 156 | Ausnehmung |
| 131 | Anschlußelement | 157 | Flansch |
| 132 | Anschlußelement | 158 | Bohrung |
| 133 | Anschlußfläche | 159 | Bohrung |
| 134 | Anschlußfläche | 160 | Bohrung |
| 135 | Ring | 161 | Bohrung |
| 136 | Ring | 162 | Bohrung |
| 137 | Spalt | AE | Ausgeleuchteter Bereich |
| 138 | Schwenkachse | B | Breite |
| 139 | Wälzkörper | H | Höhe |
| 140 | Laufbahn | HA | Hauptschwenkachse |
| 141 | Laufbahn | MS | Geometrische Mitte |
| 142 | Verzahnung | OK | Oberkante |
| 143 | zusätzlicher Ring | T | Tiefe |
| 144 | Verzahnung | VB | Abschattungsfläche |
| 145 | Gehäuseteil | X | Verbindungslinie |
| 146 | Gehäuseteil | $X_v$ | Geometrischer Mittelpunkt |

## Patentansprüche

1. Nachführeinrichtung (101) mit wenigstens einer um wenigstens eine Achse verstellbaren Aufnahmestruktur (12) zur Montierung Wenigstens eines für optische oder sonstige, elektro-magnetische Wellen sensiblen Elements mit einer optischen oder strahlungstechnischen Vorzugsrichtung, wie einem Solarpaneel (2), -reflektor, Teleskop od. dgl., und mit wenigstens je einem Drehantrieb pro Achse zur aktiven, rotatorischen Verstellung der Aufnahmestruktur (12), um das (die) daran montierte(n) Element(e) einem Gestirn, insbesondere der Sonne, mit Hilfe einer Steuerung nach einem vorgegebenen Algorithmus ein- oder mehrachsig nachzuführen, wobei der (alle)Drehahtrieb(e) jeweils als mittehfreie Schwehkeinheit(en) gestaltet ist (sind) und zwei zueinander konzentrische, ringförmige Anschlusselemente (131;132) aufweist (-en), die aneinander gelagert und zur gegenseitigen Relativverstellung mit mindestens einem Motor (155) gekoppelt oder koppelbar sind, wobei ein erstes Anschlusselement (131, 132) wenigstens eine ebene Anschlussfläche aufweist zur ortsfesten Fixierung an einem Fundament, Sockel, Ständer oder einem Anschlusselement einer anderen Schwenkeinheit, und wobei ein zweites Anschlusselement (131, 132) wenigstens eine ebene Anschlussfläche (133,134) aufweist zur drehfesten Kopplung mit der Aufnahmestruktur (12) oder mit einem Anschlusselement einer anderen Schwenkeinheit, wobei ferner zwischen den zueinanderkonzentrischen, ringförmigen Anschlusselementen (131,132) einer Schwenkeinheit wenigstens eine Reihe von Wälzkörpern (139) vorgesehen ist, die entlang von Laufbahnen (140,141) an dem ersten und zweiten Anschlusselement (31,32) abrollen, und wobei an einem Anschlusselement (31,32) eine zumindest teilweise rundum laufende Verzahnung (142) vorgesehen ist, die zusammen mit der (den) dortigen Laufbahn(en) (140) durch Bearbeitung oder Formgebung eines gemeinsamen, ringförmigen Grundkörpers gebildet ist, wobei ferner an dem anderen Anschlusselement (131,132) kranzförmig verteilt angeordnete Bohrungen (160) zur Befestigung an einem Anlagenteil vorgesehen sind, die zusammen mit der (den) dortigen Laufbahn(en) (141 ) durch Bearbeitung oder Formgebung eines gemeinsamen, ringförmigen Grundkörpers gebildet sind, **dadurch gekennzeichnet, dass**

a) die Nachführeinrichtung (101) entweder einachsig ausgebildet ist mit nur einer Schwenkeinheit, oder mehrachsig mit zwei Schwenkeinheiten, welche die selbe Struktur aufweisen und näherungsweise das selbe Gewicht tragen;
b) wobei sich die Verzahnung (142) an dem Innenumfang des inneren, ringförmigen Anschlusselements (131,132) einer Schwenkeinheit befindet.

**2.** Nachführeinrichtung (101) nach Anspruch 1, **gekennzeichnet durch** eine Schwenkeinheit, welche derart angeordnet ist, dass ihre Rotionsachse, um welhre ihre beiden ringförmigen Anschlusselemente sich gegeneinander drehen, in keiner möglichen Drehstellung der Nachführeinrichtung (101) rechtwinklig oder parallel zu der optischen oder strahlungstechnischen Vorzugsrichtung der an der verstellbaren Aufnahmestruktur (12) montierten, strahlungssensitiven Elemente orientiert ist, sondern stets schiefwinklig zu dieser.

**3.** Nachführeinrichtung (101) nach Anspruch 1 oder 2, **gekennzeichnet durch** zwei Schwenkeinheiten, welche derart angeordnet sind, dass ihre Schwenkachsen (127,128), um welche jeweils ihre beiden ringförmigen Anschlusselemente sich gegeneinander rotieren, in keiner möglichen Drehstellung der Nachführeinrichtung (101) rechtwinklig oder parallel zueinander verlaufen, sondern stets schiefwinklig zueinander.

**4.** Nachführeinrichtung (101) nach Anspruch 3, **dadurch gekennzeichnet, dass** je eine ringförmige Struktur beider Schwenkeinheiten (103,105) mit einer gemeinsamen Montagebaugruppe (104) verbunden ist, während die jeweils andere ringförmige Strüktur mit dem zu verstellenden Anlagenteil einerseits und mit einem Fundament, Chassis oder einem zweiten Anlagenteil andererseits gekoppelt ist, wobei die gemeinsame Montagebaugruppe (104) zwischen beiden Schwenkeinheiten (103,105) derart ausgebildet ist,

- dass die beiden Schwenkachsen (127/128) weder parallel zueinander verlaufen noch rechtwinklig zueinander,
- sowie vorzugsweise derart, dass wenigstens eine ringförmige Struktur wenigstens einer Schwenkeinheit (103, 105) beide Schwenkachsen (127,128) mit einem allseitigen Abstand umgreift.

**5.** Nachführeinrichtung (101) nach Anspruch 4, **dadurch gekennzeichnet, dass** sich die beiden Schwenkachsen (127,128) schneiden, vorzugsweise im Bereich der gemeinsamen Montagebaugruppe (104), insbesondere innerhalb eines Anschlußteils (121,122) derselben, wobei vorzugsweise

- der Neigungswihkel ($\alpha$) zwischen den beiden, von einem gemeinsamen Schnittpunkt(129) nach oben einerseits und nach unten andererseits weg strebenden Schwenkachsen (127,128) ein stumpfer Winkel ist, und/oder
- der Neigungswinkel ($\beta$) zwischen zwei aufeinander projizierbaren Schenkeln der beiden ggf. verlängerten Schwenkachsen (127,128) gleich 15° ist oder größer, vorzugsweise gleich 30° oder größer; insbesondere gleich 45° oder größer, und/oder gleich 75° ist oder kleiner, vorzugsweise gleich 60° oder kleiner, insbesondere gleich 45° oder kleiner.

**6.** Nachführeinrichtung (101) nach wenigstens einem der Ansoprüche 3 bis 5, **dadurch gekennzeichnet, dass** die gemeinsame Montagebaugruppe (104) eine oder vorzugsweise zwei flächige, insbesondere ebene Anschlußteil(e) (121,122) aufweist (-en), wobei die Verbindung eines flächigen Anschlußteils (121,122) mit einem oder vorzugsweisen beiden Schwenkeinheiten (103,105) vorzugsweise mittels Formschluss oderKraftschluss erfolgt, insbesondere mittels einer Verschraubung.

**7.** Nachführeinrichtung (101) nach wenigstens einem der Ansprüche 3 bis 6, **dadurch gekennzeichnet, dass** die gemeinsame Montagebaugruppe (104,163) wenigstens ein langgestrecktes Profil (118) mit einem zumindest bereichsweise konstanten Querschnitt aufweist, insbesondere ein gerade verlaufendes, langgestrecktes Profil (118) mit einem zumindest bereichsweise konstanten Querschnitt, vorzugsweise wenigstens ein einfach zusammenhängendes Profil, bspw. ein Flacheisen, Winkeleisen, T-Eisen od. dgl., oder wenigstens ein Hohlprofil (118), beispielsweise wenigstens ein gerades Rohr, vorzugsweise wenigstens ein gerades, zylindrisches Rohr, insbesondere wenigstens ein gerades, kreiszylindrisches Rohr, vorzugsweise wobei eine oder beide Stirnseiten des Profils (118) innerhalb je einer Ebene liegen, wobei bevorzugt eine Ebene, innerhalb der eine Stirnseite des Profils (118) liegt, von der Längsachsedes Rohrs lotrecht durchsetzt ist, und wobei bevorzugt eine - andere - Ebene, innerhalb der eine Stirnseite des Profils (118) liegt, von der Längsachse des Rohrs nicht lotrecht durchsetzt ist, und/oder wobei vorzugsweise an einer oder bevorzugt beiden Stirnseiten des Profils (118) je eine Befestigungsplatte (121,122) festgelegt ist, insbesondere bündig an der betreffenden Stirnseite anliegend, wobei vorzugsweise wenigstens eine Befestigungsplatte (121/122) jeweils mehrere Befestigungsbohrungen (126) aufweist, welche insbesondere kranzförmig das betreffende Profil (118) einem allseitigen Abstand umgebend angeordnet sind, und bevorzugt mittels jeweils mehrerer, die Befestigungsbohrungen (126) durchgreifender Schrauben an einer ringförmigen Struktur einer Schwenkeinheit (103,105) angeflanscht ist.

8. Nachführeinrichtung (101) nach einem der vorhergehenden Ansprüche, **dadurch gekennzeichnet, dass** mit der zumindest teilweise rundum laufenden Verzahnung wenigstens ein Ritzel und/oder wenigstens eine Schnecke kämmt, vorzugsweise wobei wenigstens ein Ritzel oder wenigstens eine Schnecke mit einer Brems- und/oder Halteeinrichtung gekoppelt oder koppelbar ist.

9. Nachführeinrichtung (101) nach Anspruch 8, **dadurch gekennzeichnet, dass** mit der Verzahnung (142,144) kämmende Ritzel oder Zahnräder innerhalb des Gehäuses (145,146) der betreffenden Schwehkeinheit (130) angeordnet sind, insbesondere geführt oder gelagert, vorzugsweise wobei ein oder mehrere, mit der Verzahnung (142,144) kämmende Zahnräder Bestandteile eines Planetengetriebes sind, insbesondere dessen Planetenräder (149), wobei solchenfalls die Verzahnung (142,144) die Aufgabe des Hohlrades des Planetengetriebes übernimmt, und wobei das Planetengetriebe vorzugsweise nach Art eines Wolfromgetriebes aufgebaut ist, also mit einem entlang einer Hauptebene geteilten Hohlrad (135,143), dessen Teile (135,143) eine geringfügig abweichende Zähnezahl {$Z_1$,$Z_2$} aufweisen.

10. Nachführeinrichtung (101) nach einem der vorhergehenden Ansprüche, **dadurch gekennzeichnet, dass** die Anschlussflächen eines Anschlusselements (21) über je ein Rohr (13) oder Gestänge mit einer oder mehreren Aufnahmestrukturen (12) verbunden sind.

11. Nachführeinrichtung (101) nach einem der vorhergehenden Ansprüche, **dadurch gekennzeichnet, dass** mehrere Tragstrukturen zwecks gemeinsamer, synchroner Schwenkbewegung untereinander gekoppelt sind, vorzugsweise über ein Gestänge oder über ein gemeinsames Anschlusselement einer Schwenkeinheit (10).

12. Nachführeinrichtung (101) nach einem der vorhergehenden Ansprüche, **dadurch gekennzeichnet, dass** ein Anschlusselement (19) mittels einer Vielzahl von in kranzförmig um die betreffende Schwenkachse (27,28) verteilt angeordneten Befestigungsbohrungen eingeschaubter Befestigungsschrauben an einer Anschlusskonstruktion verankert ist, wobei der Zentrumswinkel zwischen benachbarten Befestigungsbohrugnen und -schrauben gleich oder kteiner ist als 60°, vorzugsweise gleich oder kleiner als 45°, insbesondere gleich oder kleiner als 30°.

13. Nächführeinrichtung (101) nach Anspruch 12, **dadurch gekennzeichnet, dass** eine Anschlusskonstruktion eine vorzugsweise ringförmige Halteplatte aufweist, die von der betreffenden Schwenkachse (27, 28) lotrecht durchsetzt ist, wobei die Halteplatte bevorzugt mit wenigstens einem unterseitigen Befestigungselement zur Montage auf einem Fundament, Chassis, Rahmen, Stativ, Dreibein, Pylon oder einer Säule (6) verbunden ist, wobei das Befestigungselement insbesondere wenigstens eine ebene, horizontale Unterseite aufweist, beispielsweise wenigstens eine horizontale Befestigungsplatte oder Befestigungsschiene (32), und/oder wobei die Halteplatte mit wenigstens einer Befestigungsplatte oder -schiene (32) durch ein oder vorzugsweise zwei oder mehrere Verbindungs- und/oder Versteifungselemente mit jeweils mindestens einer von der Halteplatte zu der Befestigungsplatte oder - schiene (32) abwärts geneigt verlaufenden Kante verbunden ist.

14. Nachführeinrichtung (101) nach einem der vorhergehenden Ansprüche, **dadurch gekennzeichnet, dass** eine die Tragstruktur (13) tragende Schwenkeinheit (10) und/oder Lagerung einen Abstand (H) zu der darunter liegenden Oberfläche aufweist, der gleich oder größer ist als die halbe Erstreckung einer Tragstruktur (13) quer zu deren Schwenkachse (27,28), so dass darunter noch Raum für eine anderweitige Nutzung verbleibt, insbesondere als Parkplatz oder sonstige Verkehrsfläche.

15. Nachführeinrichtung (101) nach, einem der Vorhergehenden Ansprüche, **dadurch gekennzeichnet, dass** innerhalb des Sockels ein von einem Fundament bis zu der Aufnhamestruktur durchgehender Hohlraum zum Durchfädeln von Leitungen od. dgl. vorhanden ist, wobei innerhalb des Sockels vorzugsweise

- der energetische Anschluss des (der) Motors (-en) der Drehantriebseinheit(en) erfolgt, und/oder
- die Speicherung eines von dem (den) strahlungssensitnen Element(en) gespeisten Signals erfolgt und/oder
- der Anschluss eines von dem (den) strahlungssensitiven Element(en) gespeisten Signals mit einer vorzugsweise unterirdisch verlegten Einspeisungsleitung erfolgt, und/oder
- die Ausleitung wenigstens eines von dem (den) strahlungssensitiven Element(en) gespeisten Signals erfolgt,
- vorzugsweise wobei an dem Sockel eine Einrichtung zur Ankopplung eines von dem (den) strahlungssensitiven Element(en) gespeisten und/oder gespeicherten Signals mit einem vorzugsweise mobilen Verbraucher vorgesehen ist.

**EP 2 926 063 B1**

**Claims**

1. Tracking device (101) comprising at least one receiving structure (12) that can be adjusted about at least one axis for mounting at least one element that is sensitive to optical or other electromagnetic waves and has a preferential optical or radiation direction such as a solar panel (2), reflector, telescope or the like and comprising at least one rotary drive per axis for active rotational adjustment of the receiving structure (12) for tracking the element(s) mounted thereupon on a celestial body, in particular the sun, with the aid of a controller according to a predetermined algorithm on one or multiple axes, wherein the (all) rotary drive(s) is (are) designed as a center-free swivel unit(s) and has two concentric annular connection elements (131, 132) that are mounted on each other and are coupled or can be coupled to at least one motor (155) for mutual relative adjustment, wherein a first connection element (131, 132) has at least one flat connection surface for stationary fixation to a foundation, base, stand or a connection element of another swivel unit, and wherein a second connection element (131, 132) has at least one flat connection surface (133, 134) for rotationally fixed coupling to the receiving structure (12) or to a connection element of another swivel unit, wherein at least one row of rolling elements (139) which run along raceways (140, 141) on the first and the second connection element (31, 32) is further provided between the concentric annular connection elements (131, 132) of a swivel unit, and wherein a connection element (31, 32) has an at least partially circumferential toothing (142) which, together with the raceway(s) (140) thereupon, is formed by machining or shaping of a shared annular base body, wherein bore holes (160) which are distributed in an annular shape are provided on the other connection element (131, 132) for fastening to a system part, which are formed together with the raceway(s) (141) thereupon by machining or shaping a shared annular base body, **characterized in that**

   a) the tracking device (101) is formed either uniaxially with only one swivel unit or multiaxially with two swivel units, which have the same structure and carry approximately the same weight;
   b) wherein the toothing (142) is located on the inner circumference of the inner annular connection element (131, 132) of a swivel unit.

2. Tracking device (101) according to claim 1, **characterized by** a swivel unit which is located such that its axis of rotation about which its two annular connection elements rotate against each other is in no possible rotational position of the tracking device (101) oriented at right angles or parallel to the optical or preferred radiation direction of the radiation-sensitive elements mounted on the adjustable receiving structure (12), but always at an oblique angle to the latter.

3. Tracking device (101) according to claim 1 or 2, **characterized by** two swivel units which are located such that their swivel axes (127, 128) about which each of their two annular connection elements rotate against each other run in no possible rotational position of the tracking device (101) at right angles or parallel to each other, but always at an oblique angle to each other.

4. Tracking device (101) according to claim 3, **characterized in that** one annular structure of both swivel units (103, 105) is coupled to a common assembly module (104), respectively, while the other annular structure is coupled to the system part to be adjusted on the one hand and with a foundation, chassis or a second system part on the other hand, respectively, the common assembly module (104) between the two swivel units (103, 105) being formed such

   - that the two swivel axes (127, 128) neither run parallel to one another nor at right angles to one another
   - and preferably such that at least one annular structure of at least one swivel unit (103, 105) encompasses both swivel axes (127, 128) at a distance on all sides.

5. Tracking device (101) according to claim 4, **characterized in that** the two swivel axes (127, 128) intersect, preferably in the area of the common assembly module (104), in particular within a connecting part (121, 122) thereof, wherein preferably

   - the angle of inclination ($\alpha$) between the two swivel axes (127, 128) that extend from a common intersection (129) upwards on the one hand and downwards on the other hand is an obtuse angle and / or
   - the angle of inclination ($\beta$) between two mutually projectable legs of the two possibly extended swivel axes (127, 128) is equal 15° or greater, preferably equal 30° or greater, in particular equal 45° or greater, and / or equal 75° or less, preferably equal 60° or less, in particular equal 45° or less.

6. Tracking device (101) according to at least one of claims 3 to 5, **characterized in that** the common assembly module (104) has one or preferably two flat, in particular planar connection part(s) (121, 122), wherein the connection of a

25

flat connection part (121, 122) to one or preferably two swivel units (103, 105) is carried out preferably by means of a positive or non-positive connection, in particular by means of a screw connection.

7. Tracking device (101) according to at least one of claims 3 to 6, **characterized in that** the common assembly module (104, 163) has at least one elongated profile (118) with an at least regionally constant cross-section, in particular a straight elongated profile (118) with an at least regionally constant cross-section, preferably at least one simply connected profile, for example a flat iron, angle iron, T-iron or the like, or at least one hollow profile (118), for example at least one straight tube, preferably at least one straight cylindrical tube, in particular at least one straight constant radius cylindrical tube, preferably with one or both front sides of the profile (118) lying within one plane, wherein preferably one plane within which one front side of the profile (118) lies is perpendicularly penetrated by the longitudinal axis of the tube, and wherein preferably another level, within which one front side of the profile (118) lies is not perpendicularly penetrated by the longitudinal axis of the tube, and/or wherein preferably one fastening plate (121, 122) is fixed on one or preferably both front sides of the profile (118), respectively, in particular flush on the respective front side, wherein preferably at least one fastening plate (121, 122) each has a plurality of fastening bores (126), which, in particular, are distributed in an annular shape surrounding the relevant profile (118) with a distance on all sides, and is preferably flanged to an annular structure of a swivel unit (103, 105) by means of a plurality of screws which penetrate the fastening bores (126).

8. Tracking device (101) according to any one of the preceding claims, **characterized in that** at least one pinion and / or at least one worm meshes with the toothing which is at least partially circumferential, wherein preferably at least one pinion or at least one worm is coupled or can be coupled to a braking and / or holding device.

9. Tracking device (101) according to claim 8, **characterized in that** pinions or gears meshing with the toothing (142, 144) are arranged within the housing (145, 146) of the respective swivel unit (130), in particular guided or mounted, wherein preferably one or more gears meshing with the toothing (142, 144) are components of a planetary gear set, in particular its planetary gears (149), wherein the toothing (142, 144) takes over the function of the ring gear of the planetary gear set, and the planetary gear is preferably constructed according to a manner of a Wolfrom gear set, that is with a ring gear (135, 143) divided along a main plane, the parts (135, 143) of which having a slightly divergent number of teeth ($Z_1$, $Z_2$).

10. Tracking device (101) according to any one of the preceding claims, **characterized in that** the connection surfaces of a connection element (21) are each connected via a tube (13) or linkage to one or more receiving structures (12).

11. Tracking device (101) according to any one of the preceding claims, **characterized in that** a plurality of support structures is coupled to one another for the purpose of a common synchronous swivel movement, preferably via a linkage or via a common connection element of a swivel unit (10).

12. Tracking device (101) according to one of the preceding claims, **characterized in that** a connection element (19) is anchored to a connecting structure by means of a plurality of fastening bores which are screwed around a corresponding swivel axis (27, 28) in an annular shape, wherein the center angle between adjacent fastening bores and screws is equal to or less than 60°, preferably equal to or less than 45°, in particular equal to or less than 30°.

13. Tracking device (101) according to claim 12, **characterized in that** a connecting structure has a preferably annular holding plate which is perpendicularly penetrated by the corresponding swivel axis (27, 28), the holding plate preferably having at least one fastening element on its bottom side for mounting on a foundation, chassis, frame, stand, tripod, pylon or connecting to a column (6), the fastening element in particular having at least one flat horizontal bottom side, for example at least one horizontal fastening plate or fastening rail (32), and / or wherein the holding plate is connected with at least a fastening plate or rail (32) by one or preferably two or more connecting and / or stiffening elements, each having at least one edge which slopes downwards from the holding plate to the fastening plate or rail (32).

14. Tracking device (101) according to any one of the preceding claims, **characterized in that** a swivel unit (10) which carries the supporting structure (13) and / or mounting has a distance (H) to its underlying surface which is equal to or greater than half the extent of a support structure (13) transversely to its swivel axis (27, 28) so that there is still space below for other use, in particular as a parking area or other traffic area.

15. Tracking device (101) according to one of the preceding claims, **characterized in that** there is a continuous hollow space within the base from a foundation to the receiving structure for threading lines or the like, wherein within the base preferably

- the energetic connection of the motor(s) of the rotary drive unit(s) takes place, and / or
- a signal fed by the radiation-sensitive element(s) is stored and / or
- the connection of a signal fed by the radiation-sensitive element(s) with a preferably underground feed line takes place, and / or
- at least one signal fed by the radiation-sensitive element(s) is output,
- wherein preferably a device for coupling a signal fed and / or stored by the radiation-sensitive element(s) to a preferably mobile consumer is provided at the base.

## Revendications

1. Dispositif d'asservissement (101) comprenant au moins une structure de réception (12) déplaçable autour d'un ou de plusieurs axes, destinée au montage d'un ou de plusieurs éléments sensibles aux ondes optiques ou à d'autres ondes électromagnétiques et présentant une direction optique ou de rayonnement préférentielle, tels qu'un panneau solaire (2), un réflecteur solaire, un télescope ou analogue, et au moins un organe d'entraînement rotatif par axe pour déplacer activement la structure de réception (12) en rotation afin d'asservir à la course d'un astre, notamment du soleil, sur un ou plusieurs axes, l'élément (les éléments) qui y est (sont) monté(s) à l'aide d'une commande basée sur un algorithme prédéfini, dans lequel l'organe (tous les organes) d'entraînement rotatif est (sont) conçu(s) en tant qu'unité(s) pivotante(s) à centre ouvert et comprend (comprennent) deux éléments de raccordement (131, 132) annulaires concentriques l'un par rapport à l'autre, qui sont montés l'un sur l'autre et sont ou peuvent être couplés à au moins un moteur (155) permettant un déplacement relatif mutuel, dans lequel un premier élément de raccordement (131, 132) comprend au moins une surface de raccordement plane destinée à être fixée à demeure sur une fondation, un socle, un support ou un élément de raccordement d'une autre unité pivotante, et dans lequel un second élément de raccordement (131, 132) comprend au moins une surface de raccordement (133 ,134) plane destiné à être accouplée de manière solidaire en rotation avec la structure de support (12) ou avec un élément de raccordement d'une autre unité pivotante, dans lequel en outre au moins une série d'éléments de roulement (139) est prévue entre les deux éléments de raccordement (131, 132) annulaires concentriques l'un par rapport à l'autre d'une unité pivotante, lesdits élément roulent en prenant appui sur le premier et le second élément de raccordement (131, 132) le long de chemins de roulement (140, 141), et dans lequel une denture (142) au moins en partie circonférentielle est prévue sur un élément de raccordement (31, 32), ladite denture formée avec le (les) chemin(s) de roulement (140) en usinant ou en façonnant un corps de base annulaire commun, dans lequel en outre des trous (160) répartis en forme de couronne sont prévus sur l'autre élément de raccordement (131, 132) pour la fixation sur une partie de l'installation, lesdits trous sont réalisés avec le (les) chemin(s) de roulement (141) en usinant ou en façonnant un corps de base annulaire commun, **caractérisé en ce que**

   a) le dispositif d'asservissement (101) est réalisé soit de façon monoaxiale avec une seule unité pivotante, soit de façon multiaxiale avec deux unités pivotantes ayant la même structure et portant approximativement le même poids ;
   b) dans lequel la denture (142) se trouve sur le pourtour intérieur de l'élément de raccordement (131, 132) annulaire intérieur d'une unité pivotante.

2. Dispositif d'asservissement (101) selon la revendication 1, **caractérisé par** une unité pivotante disposée de telle manière que son axe de rotation autour duquel ses deux éléments de raccordement annulaires tournent l'un par rapport à l'autre ne soit jamais perpendiculaire ou parallèle à la direction optique ou de rayonnement préférentielle des éléments sensibles au rayonnement montés sur la structure de réception (12) déplaçable, quelle que soit la position en rotation du dispositif d'asservissement (101), mais toujours oblique par rapport à celle-ci.

3. Dispositif d'asservissement (101) selon la revendication 1 ou 2, **caractérisé par** deux unités pivotantes disposées de telle manière que leurs axes de rotation (127, 128) autour desquels leurs deux éléments de raccordement annulaires tournent l'un par rapport à l'autre ne soient jamais perpendiculaires ou parallèles entre eux quelle que soit la position en rotation du dispositif d'asservissement (101), mais toujours obliques l'un par rapport à l'autre.

4. Dispositif d'asservissement (101) selon la revendication 3, **caractérisé en ce qu'**une structure annulaire de chacune des deux unités pivotantes (103, 105) est reliée respectivement à un ensemble de montage (104), tandis que l'autre structure annulaire est accouplée, d'une part, à la partie de l'installation à déplacer et, d'autre part, à une fondation, un châssis ou une seconde partie de l'installation, dans lequel l'ensemble de montage (104) commun est réalisé entre les deux unités pivotantes (103, 105) de telle manière

- que les deux axes de pivotement (127, 128) ne soient ni parallèles entre eux ni perpendiculaires l'un par rapport à l'autre,
- et de préférence de telle sorte qu'au moins une structure annulaire d'au moins une unité pivotante (103, 105) entoure les deux axes de pivotement (127, 128) en laissant un espace tout autour.

**5.** Dispositif d'asservissement (101) selon la revendication 4, **caractérisé en ce que** les deux axes de pivotement (127, 128) se coupent, de préférence dans la zone de l'ensemble de montage (104) commun, notamment à l'intérieur d'un élément de raccordement (121, 122) de ce dernier, dans lequel de préférence

- l'angle d'inclinaison ($\alpha$) formé entre les deux axes de pivotement (127, 128) partant d'un point d'intersection (129) commun vers le haut, d'une part, et vers le bas, d'autre part, est un angle obtus, et/ou que
- l'angle d'inclinaison ($\beta$) formé entre deux branches projetables l'une sur l'autre des deux axes de pivotement (127, 128) prolongés le cas échéant est égal ou supérieur à 15°, de préférence égal ou supérieur à 30°, notamment égal ou supérieur à 45° et/ou égal ou inférieur à 75°, de préférence égal ou inférieur à 60°, notamment égal ou inférieur à 45°.

**6.** Dispositif d'asservissement (101) selon au moins l'une des revendications 3 à 5, **caractérisé en ce que** l'ensemble de montage (104) commun comprend un ou de préférence deux élément(s) de raccordement (121, 122) plan(s), notamment plat(s), dans lequel la liaison entre un élément de raccordement (121, 122) plan et un ou de préférence les deux unités pivotantes (103, 105) est réalisée de préférence par engagement positif ou par adhérence, notamment par vissage.

**7.** Dispositif d'asservissement (101) selon au moins l'une des revendications 3 à 6, **caractérisé en ce que** l'ensemble de montage (104, 163) commun comprend au moins un profilé (118) allongé de section constante au moins par endroits, notamment un profilé (118) allongé rectiligne de section constante au moins par endroits, de préférence au moins un profilé de forme simple, par exemple un profilé plat, une cornière, un profilé en T ou analogue, ou au moins un profilé creux (118), par exemple au moins un tube rectiligne, de préférence au moins un tube cylindrique rectiligne, notamment au moins un tube cylindrique circulaire rectiligne, de préférence dans lequel une ou les deux faces frontales du profilé (118) sont chacune situées dans un plan, dans lequel, de préférence, un plan dans lequel est située une face frontale du profilé (118) est traversé perpendiculairement par l'axe longitudinal du tube, et dans lequel, de préférence, un - autre - plan dans lequel est située une face frontale du profilé (118) n'est pas traversé perpendiculairement par l'axe longitudinal du tube, et/ou dans lequel, de préférence, une platine de fixation (121, 122) est fixée respectivement sur une ou de préférence les deux faces frontales du profilé (118) notamment en étant appliquée à plat contre la face frontale concernée, dans lequel, de préférence, au moins une platine de fixation (121, 122) comprend plusieurs trous de fixation (126) disposés notamment en forme de couronne entourant le profilé (118) concerné en laissant un espace tout autour, et est bridée, de préférence au moyen de plusieurs vis traversant les trous de fixation (126), sur une structure annulaire d'une unité pivotante (103, 105).

**8.** Dispositif d'asservissement (101) selon l'une des revendications précédentes, **caractérisé en ce qu'**au moins un pignon et/ou au moins une vis sans fin engrène avec la denture au moins en partie circonférentielle, de préférence dans lequel au moins un pignon ou au moins une vis sans fin est ou peut être couplé(e) à un dispositif de freinage et/ou d'arrêt.

**9.** Dispositif d'asservissement (101) selon la revendication 8, **caractérisé en ce que** des pignons ou des roues dentées engrenant avec la denture (142, 144) sont disposé(e)s, notamment guidé(e)s ou monté(e)s dans un boîtier (145, 146) de l'unité pivotante (130) correspondante, de préférence dans lequel une ou plusieurs roues dentées engrenant avec la denture (142, 144) font partie intégrante d'un engrenage planétaire, notamment de ses pignons satellites (149), dans lequel dans un tel cas, la denture (142, 144) joue le rôle de couronne à denture intérieure de l'engrenage planétaire, et que l'engrenage planétaire est de préférence conçu à la manière d'un engrenage de type Wolfrom, c'est-à-dire avec une couronne à denture intérieure (135, 143) divisée en deux le long d'un plan principal, dont les parties (135, 143) présentent un nombre de dents ($Z_1$, $Z_2$) légèrement différent.

**10.** Dispositif d'asservissement (101) selon l'une des revendications précédentes, **caractérisé en ce que** les surfaces de raccordement d'un élément de raccordement (21) sont reliées respectivement par un tube (13) ou une tringle à une ou plusieurs structures de réception (12).

**11.** Dispositif d'asservissement (101) selon au moins l'une des revendications précédentes, **caractérisé en ce que** plusieurs structures porteuses sont accouplées entre elles afin de pivoter ensemble de manière synchrone, de préférence par le biais d'une tringle ou d'un élément de raccordement commun d'une unité pivotante (10).

**12.** Dispositif d'asservissement (101) selon l'une des revendications précédentes, **caractérisé en ce qu'**un élément de raccordement (19) est ancré sur une structure de raccordement au moyen d'une pluralité de vis de fixation vissées dans des trous de fixation répartis en forme de couronne autour de l'axe de pivotement (27, 28) correspondant, dans lequel l'angle au centre entre des trous et des vis de fixations adjacents est égal ou inférieur à 60°, de préférence égal ou inférieur à 45°, notamment égal ou inférieur à 30°.

**13.** Dispositif d'asservissement (101) selon la revendication 12, **caractérisé en ce qu'**une structure de raccordement comprend une platine de support de préférence annulaire traversée perpendiculairement par l'axe de pivotement (27, 28) correspondant, dans lequel la platine de support est de préférence reliée à au moins un élément de fixation situé en dessous, destiné à être monté sur une fondation, un châssis, un cadre, un pied, un trépied, un pylône ou une colonne (6), dans lequel l'élément de fixation comprend notamment au moins une face inférieure horizontale plane, par exemple au moins une platine ou un rail de fixation (32) horizontal(e), et/ou dans lequel la platine de support est reliée à au moins une platine ou un rail de fixation (32) par un ou de préférence deux ou plusieurs éléments de liaison et/ou de renfort comportant chacun au moins une arête s'étendant en biais vers le bas entre la platine de support et la platine ou le rail de fixation (32).

**14.** Dispositif d'asservissement (101) selon au moins l'une des revendications précédentes, **caractérisé en ce qu'**une unité pivotante (10) et/ou un support portant la structure porteuse (13) présente par rapport à la surface située en dessous un écart (H) qui est égal ou supérieur à la moitié de l'étendue d'une structure porteuse (13) transversalement par rapport à l'axe de pivotement (27, 28) de cette dernière, de telle sorte qu'il reste en dessous de l'espace pour un autre usage, par exemple pour un parking ou une autre aire de circulation.

**15.** Dispositif d'asservissement (101) selon au moins l'une des revendications précédentes, **caractérisé en ce qu'**à l'intérieur du socle se trouve un vide s'étendant entre une fondation et la structure de réception et destiné au passage de câbles ou analogues, dans lequel

- le raccordement de l'alimentation du (des) moteur(s) de l'organe (des organes) d'entraînement rotatif, et/ou
- l'enregistrement d'un signal fourni par l'élément (les éléments) sensible(s) au rayonnement et/ou
- le raccordement d'un signal fourni par l'élément (les éléments) sensible(s) au rayonnement à un câble d'alimentation de préférence enterré, et/ou
- la sortie d'au moins un signal fourni par l'élément (les éléments) sensible(s) au rayonnement,

est réalisé de préférence à l'intérieur du socle,
- de préférence dans lequel un dispositif est prévu sur le socle pour coupler un signal fourni par l'élément (les éléments) sensible(s) au rayonnement et/ou enregistré à un consommateur électrique de préférence mobile.

# Fig.1

Position a :

$0° < |\Omega| < 90°$

6

VB

Position b :

$|\Omega| = 0°$

20

VB

Position c :

12

10

$0° < |\Omega| < 90°$

VB

30

Fig.2

Fig.2a

Fig.3

EP 2 926 063 B1

Fig.4

Fig.5

# Fig.6

## Fig.7a

## Fig.7b

Fig.8

Fig.9a

Fig.9b

Fig.9c

Fig.10a

EP 2 926 063 B1

Fig.10b

EP 2 926 063 B1

Fig.10c

OK G.o.G

2 12 32 6" 31 15 31' 6" 31" 31

HA

13

Ω

Fig.10d

EP 2 926 063 B1

Fig.10e

Fig.10f

## Fig.11

## Fig.12

Fig.13

Fig.14

Fig.15

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 2943944
- EP 0114240 A
- US 20110023940 A1
- WO 2009147454 A2
- CN 201269283 Y
- US 20090229597 A1
- DE 102010014087 A1